# EUROPEAN PATENT SPECIFICATION

(11) **EP 1 329 056 B1**
(45) Date of publication and mention of the grant of the patent: **06.07.2011**
(21) Application number: 01963149.8
(22) Date of filing: 28.08.2001
(51) Int. Cl.: G06F 17/30, H04W 4/02, H04L 29/08

(54) **User terminal capable of processing geographical location data and method therefor**
Benutzerendgerät zur Verabeitung von geografischen Standortdaten und Verfahren dafür
Terminal utilisateur capable de traiter des données de localisation géographique et procédé correspondant

(30) Priority: 25.08.2000 GB 0021067
(43) Date of publication of application: 23.07.2003
(60) Divisional application: 10185457.8
(73) Proprietor: Yogogo Limited, London WC1V 6HU (GB)
(72) Inventor: SPAARGAREN, Jerome, London WC1V 6HU (GB); HERMELE, Daniel Stephen, Welwyn Garden City Herts, AL71HQ (GB)
(74) Representative: Spaargaren, Jerome
(86) International application number: PCT/GB2001/003853
(87) International publication number: WO 2002/017567

(56) References cited:
- EP-A- 0 848 564
- EP-A- 1 009 137
- WO-A-00/29979
- WO-A-00/49530
- WO-A-00/50844
- WO-A-98/59506
- WO-A1-00/49530
- PATENT ABSTRACTS OF JAPAN vol. 1998, no. 05, 30 April 1998 (1998-04-30) & JP 10 013961 A (FUJITSU LTD), 16 January 1998 (1998-01-16) -& US 6 115 611 A (KIMOTO TAKASHI ET AL) 5 September 2000 (2000-09-05)

## Description

### Field of the Present Invention

The present invention relates to the processing and transmission of geographical location data to data processing devices.

### Background

Conventionally, a user of the Internet with a personal computer (PC) accesses an Internet site by establishing a connection to an Internet Service Provider (ISP) using a browser application running on the PC and by entering or selecting a network resource identifier for the required site. Generally, the network resource identifier is provided in the form of a Uniform Resource Locator (URL) comprising a domain name. The domain name is translated into an Internet Protocol (IP) address for the site by the browser using the domain name service (DNS). Some domain names are translated into different IP addresses corresponding, for example, to different servers on the basis of the identity of the ISP or IP subnet address. Mirror sites are known which provide the same or a similar service to users accessing the Internet through different ISPs or subnets. For example, multiple servers may be provided for a site from which users may download a new software release, each server being responsible for serving users accessing through ISPs in different continents. The user may be accessing the Internet from a notebook PC by connecting to his or her home ISP whilst travelling anywhere in the world, but the server to which his browser will connect will depend on the identity of the home ISP or subnet address.

Recently, users have been provided with access to sites using mobile data processing devices such as wireless application protocol (WAP) -enabled mobile phones, personal digital assistants (PDAs) and pocket PCs. Currently, WAP services and sites are fairly basic since the bandwidth to mobile devices is extremely limited. However, new wireless communications technologies will soon be provided such as the General Packet Radio Service (GPRS) for second generation mobile devices and third generation wireless communication technologies such as the Universal Mobile Telecommunications System (UMTS). These technologies and further generations of wireless communications technologies will provide sufficient bandwidth to make access to the Internet using wireless mobile devices feasible and practical.

The provision of location-based services delivered over the Internet is known. For example, Scoot™ offers a business directory service in which a user specifies search criteria in the form of a business service category or type and a geographical location using one or more Web forms presented on a browser application and submits the criteria as a query to a Web server. In response, the Web server provides a page listing businesses meeting the criteria in terms of business type and geographical location. Contact details such as postal address and telephone numbers are given as well as distances from a point representing the geographical location specified. A map may be displayed of the area in which a selected business is located based on the post code information in the postal addresses. Also, telephone numbers may be transmitted to mobile phones using SMS.

Another example of location-based service provision is the mapping service offered by multimap.com. Multimap.com operate Web and WAP servers that can supply maps and other localised information in response to user queries specifying a geographical location as a post code, well known place name or grid reference. Maps can be embedded into Web pages or WAP cards of third parties for download by users accessing the third party's site. Universal Resource Locator (URL) links can also be embedded into third party's Web pages or WAP cards. The embedded URLs may be downloaded by users accessing the third party's site and selected as hyperlinks. The URLs generally use postal code or place name data to identify the location of the map required.

Microsoft™ Address Book provides a facility for obtaining a map on the basis of postal address information. On activating a button, the map is automatically requested from a predetermined remote Web server which is hardcoded in the application and unalterable by the user. A similar facility is provided in the arrangement described in US-A-5946687, assigned to Lucent Technologies, Inc. In this arrangement, a personal information manager (PIM) program, which stores personal and business contacts, is geo-enabled. The PIM provides a display for selecting a contact from a list of stored contacts and a number of buttons for requesting different geographic services, including a map service, a directions service, a weather service, and a yellow pages service. When the user clicks on one of the buttons, the PIM formats a request, including geographic information from the contacts list in the form of a postal address, a town name or a postal (ZIP) code, to be sent to a geographic information server. The information server retrieves geographic information appropriate to that location, and sends it to the PIM for display.

A drawback of this prior art is that postal address data, town name, and postal code data, particularly in the form entered by a user into a contacts database, is often incomplete and insufficient to correctly resolve to a unique location and, in any case, requires a relatively large amount of databased information and processing resources to resolve. The case is even further complicated when the user wishes to access information relating to locations in different countries, perhaps even from various countries around the world, because of the different postal addressing and coding schemes used in each individual country. Also, the arrangements cannot deal with locations which are not identified by postal addresses.

The provision of location-based services delivered over cellular networks using the Short Message Service (SMS) or Wireless Application Protocol (WAP) is known. For example, the Finnish cellular network operator Sonera™ have a service offering called Sonera Zed™ in which cellular subscribers may obtain location-based content and services using their mobile phones. For example, a cellular subscriber may use his or her mobile phone to view an event guide for a selected category, such as film, and receive details on which local cinemas are screening a selected film at which times, as well as book tickets and pay for them. Another service offered by Sonera is Zed Finder™, a directory service that allows subscribers to find personal or business contact details, such as telephone numbers and postal addresses, via SMS or WAP. A subscriber enters identifying information into his mobile phone, such as name and well-known geographical location name, and submits a search request. In response, an SMS entity or WAP proxy server returns the required contact detail to the mobile phone as an SMS or WAP card.

Mobile phones with built-in GPS receivers are known. Garmin's™ NavTalk™ product, for example, combines an analog cellular phone conforming to the Advanced Mobile Phone Service (AMPS) with a GPS receiver. It is able to obtain positional data via the GPS system to an accuracy of 1-5 metres and velocity accuracy is about 0.1 knots. It is able to transmit the terminal's current location over the cellular network to other Navtalk™ devices using Dual Tone Multiple Frequency (DTMF) codes. The Benefon Locus™, now renamed Track™ is able to transmit its current location using the Short Message Service (SMS) in the format of the Mobile Phone Telematics Protocol (MPTP). Both the Navtalk™ and Benefon Track™ display the location of the sending terminal on a map stored in the memory of the recipient terminal. A problem with both of these types of devices is that they require a similar device, employing the same location-based protocol used for message transmission, for message receipt at the recipient device in order to allow the recipient device to access the location data.

Another example of a location-based service, called TomTom™, is offered by PalmTop Software Ltd. The service is said to allow users of smartphones or PCs to access travel services, such as maps and local services directory information, specific to a current location or a location selected from a favourites list or a history list of locations stored at a Web or WAP server operated by TomTom on behalf of a registered user. According to information made available on their website www.tomtom.com on 25 August 2000, the Web or WAP server may operate a number of modules including modules that keep track of favourite locations and recently visited locations for a user, and can find favourite and recently visited places in any particular area and near any particular location. User settings, favourite locations and other user-dependent information can be managed both from the phone and on the PC, providing the user with one central service that can be accessed wherever the user happens to be, on the move or at home. However, this is an example of a "walled garden" where all the service data and content is provided by a centralised service.

Information relating to the current location of a mobile device may be provided by the mobile network to the subscriber or to third parties. The Global System for Mobile Communications (GSM) and UMTS, for example, will offer location services as described in the European Telecommunications Standards Institute (ETSI) technical specification ETSI TS 122 071. A similar proposition is provided in the Ericsson Mobile Positioning System (MPS). Location information concerning a mobile device is generally private to the subscriber except for emergency services and various legally required or sanctioned purposes. Access to current location information concerning mobile devices by third parties, such as value added service providers, is generally controlled according to subscription profiles, or privacy settings, and maintained by the network.

Mark-up Languages for describing location related information are known. The Point of Interest Exchange (POIX) language and Navigation Mark-up Language (NVML) are two such languages. A specification of the POIX language is available from the World Wide Web Consortium's website at http://www.w3.org/TR/poix/. A specification of the NVML language is available from the World Wide Web Consortium's website at http://www.w3.org/TR/NVML.

POIX is a language, written in XML, for describing location-related information that is suitable for exchanging it over the Internet, e.g. via e-mail or by embedding in other documents. It is capable to describe not only specific location information, such as latitude and longitude, but also various supplemental information about the target location such as route to the target location and contact information for the target location. The proposal also allows specification of format information such as geodetic datum and angle unit.

NVML is a markup language for describing the navigation information for a variety of mobile information appliances, such as smart phones, PDAs equipped with GPS, and car navigation systems. It is written in XML, and has the capability to describe several types of navigation information such as a route from the current point to a destination point, a way to a shop from the nearest station, transportation courses, sightseeing courses, and tour schedules. This language is able to describe location information as latitude, longitude, address and various additional items. It also has the capability to describe a route to a target location as a list of locations and additional explanations.

A further known markup language for describing location related information is the Geographic Markup Language (GML) as developed by the Open Geographical Information Systems (OpenGIS) Consortium. GML is also written in XML.

EP1009137 and EP-848564 describe arrangements in which the current position of a user terminal can be used to generate a service request for transmission to, and processing by, a remote server. Thus the provision of location based services is related to the user's current location,

WO 00/49530 and WO 00/29979 describe using the current position of the user terminal to generate a service request for processing by a remote server. It is an object of the invention to provide a number of improvements in relation to user terminals and systems capable of processing geographic location data and to overcome drawbacks of these known devices and systems.

### Summary of the Invention

Aspects of the invention are set out in the appended claims.

Features and advantages of the various aspects of the present invention include functionality allowing items of location data, in particular but not exclusively spatial coordinate data, to be readily disseminated and used in manners convenient to users of devices and systems arranged in accordance with the invention. Use of spatial coordinate data allows locations to be specified and recognised in a unique and reliable manner, whilst such data can be used to specify and recognise a location on substantially any point of the earth's surface or even locations remote from the earth's surface. Aspects of the invention furthermore allow privacy of location data associated with a user to be maintained in manners convenient to users. Aspects of the invention furthermore allow openness in the use and dissemination of location data. Namely, locations provided by a wide range of different sources may be utilised by wide ranges of users to obtain wide ranges of location-based services. Embodiments of the invention provide "location-smart" data processing devices, including user terminals, capable of providing advanced features and functions relating to the processing of geographic location data. Further features and advantages of the present invention will become apparent from the following description, given by way of example only, of embodiments of the present invention, made with reference to the accompanying drawings wherein:
Figure 1 is a schematic illustration of data processing systems arranged in accordance with embodiments of the present invention;
Figure 2 is a schematic diagram of elements of a user terminal arranged in accordance with embodiments of the present invention;
Figure 3 shows spatial coordinate data representations used in embodiments of the invention;
Figures 4 and 5 show user input screens for inputting a location;
Figure 6 illustrates location data stored used in embodiments of the invention;
Figures 7 to 17 illustrate features of a graphical user interface provided by a hypermedia browser application arranged in accordance with embodiments of the present invention;
Figures 18 to 20 illustrate features of a graphical user interface provided by an e-mail application arranged in accordance with embodiments of the present invention;
Figures 21 to 25 illustrate features of a graphical user interface provided by a cellular telephone terminal arranged in accordance with embodiments of the present invention; and

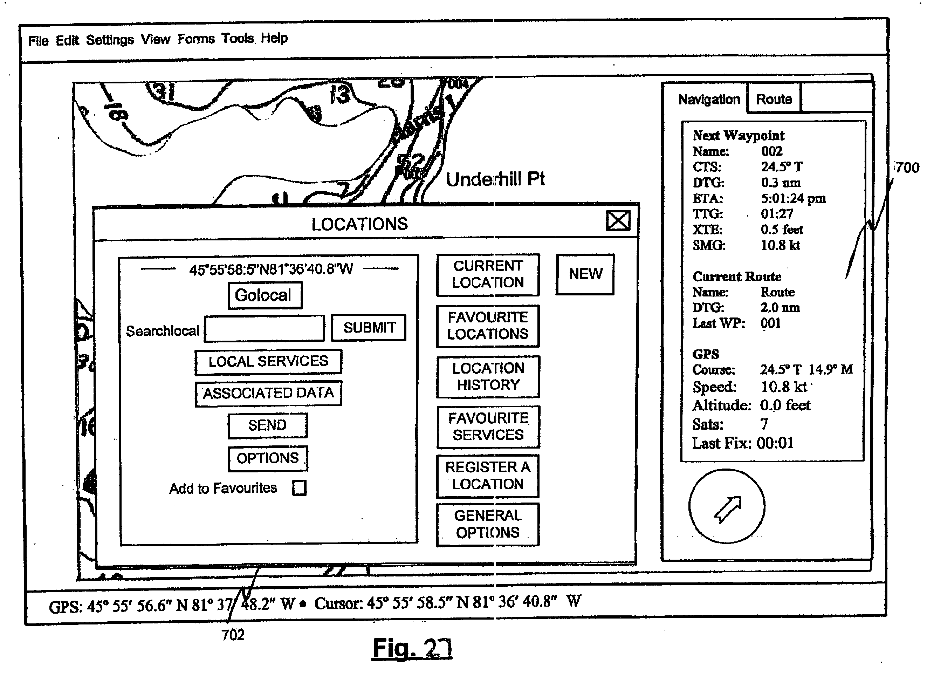

Figures 26 and 27 illustrate features of a graphical user interface provided by a terminal-based navigation application arranged in accordance with embodiments of the present invention;

### Detailed Description

### Network Access Arrangements

In embodiments of the present invention, users may make use of location and associated data with both "location-smart" user terminals, arranged to manage and process location and associated data in accordance with the present invention, and conventional or "location-dumb" user terminals. "Location-smart" user terminals may be data processing devices of any type, such as fixed PCs, notebooks or laptop computers, handheld computers, PDAs, fixed telephones, mobile phones, fax machines, broadcast/cable/satellite televisions and radios etc. The terminal applications that run on the user terminals may be peer-to-peer, client or server applications and may be capable of communicating in any of a number of communication application modes, such as telephony, video, e-mail, IRQ, SMS, Web or WAP, or transfer modes such as HTTP, WAP, Telnet, Rlogin, FTP etc. Similarly, "location dumb" user terminals may be of any such type and run terminal applications of any such type.

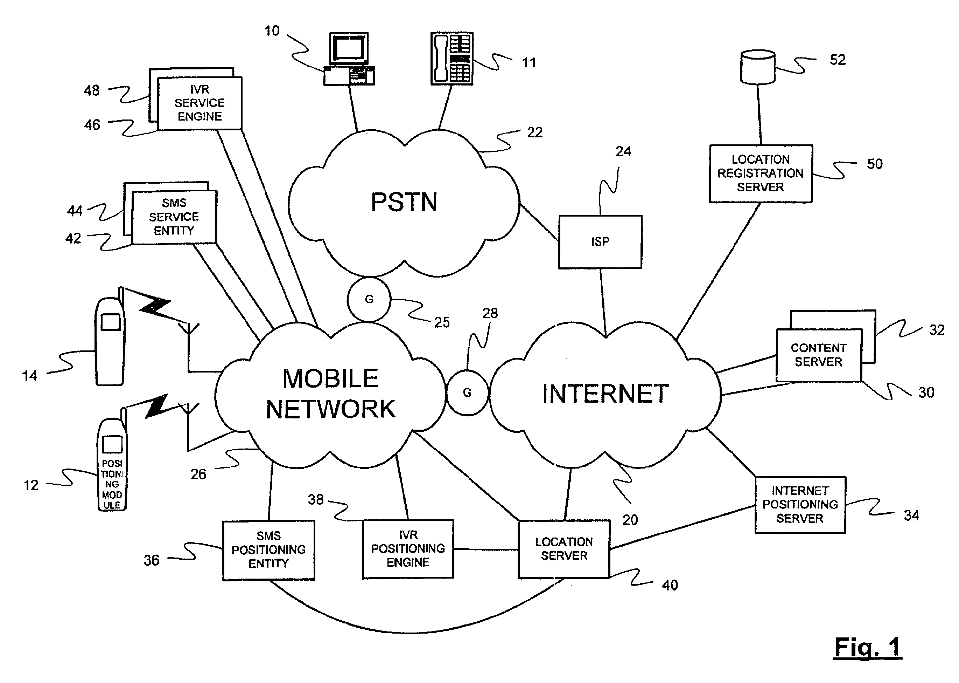

"Location smart" user terminals may store location and associated data in a local data store and utilise geographical location and associated data by means of terminal-side applications as will be described in detail below. Figure 1 schematically illustrates possible arrangements of such user terminals with network access to various service resources and other user terminals. Four exemplary "location-smart" user terminals are shown - a fixed terminal 10, such as a PC or digital television with networking capability, a fixed telephone 11, a mobile terminal 12 able to determine its geographical location with equipment or programs, such as a notebook PC, PDA or mobile phone with an internal or co-located positioning module such as a GPS receiver or on-board triangulation-based location calculation equipment, and a mobile terminal 14, such as a notebook PC, PDA or mobile phone, without internal or co-located locating equipment, but having a positioning software application capable of receiving and processing data received from the mobile network indicating its current position. Fixed terminal 10 is connected to the Internet 20 through a PSTN 22 and ISP 24. Fixed telephone 11 is connected by a voice circuit link and PSTN 22 to other telephones and IVR engines in the various interconnected telecommunications networks. PSTN 22 is connected to a mobile network 26 via a gateway 25. Mobile terminals 12 and 14 are connected to the Internet through mobile network 26 and a gateway 28. Mobile network 26 may be any cellular network such as a GSM or UMTS network. Mobile terminals 12, 14 may be in the form of hand-held devices, or other devices carried by a user. Alternatively, mobile terminals 12, 14 may form part of an on-board vehicle navigational system.

Many methods of geographically locating mobile devices are known or proposed and have varying levels of accuracy. For example, cellular mobile networks maintain a record of the current cell in which a mobile terminal is located, although cells can often be several square miles in area. Location can be determined more accurately using other well-known methods. One such method is to use a global positioning system (GPS) transceiver at the mobile device. Other methods are to use measurements such as signal strength or timing advance in respect of communications between the mobile device and three (or more) base stations (BTSs) of the mobile network to triangulate the position of the mobile device. The location calculation may be performed either at the mobile station itself or at a node of the network. The location of a mobile device may be determined in three-dimensional as well as two-dimensional coordinates and accuracy levels are estimated to be as good as within 5 or 10 metres in horizontal and vertical axes.

Mobile terminal 12 is able to determine and communicate its location to servers 30 or 32 without assistance from mobile network 26 since it has location-determining capabilities itself. Mobile terminal 14 does not have location-determining capabilities itself. However, mobile network 26 is able to locate mobile terminal 14 using cell registration or triangulation methods such as those described above. Location data is made available via any of the positioning services illustrated, namely in an Internet positioning server 34, Short Message Service (SMS) positioning entity 36 or Interactive Voice Response (IVR) positioning engine 38, which are all authorised location clients of location server 40 of mobile network 26 such that these service provision nodes are capable of obtaining the geographic location of a mobile terminal 14 from location server 40 by providing the server 40 with a suitable identifier for the terminal, such as its directory number or an allotted IP address. Alternatively, location data may be requested and provided to mobile device 14 via other signalling channels available in mobile network 26.

Internet positioning server 34 is capable of taking a mobile terminal identity received in a service request, for example an HTTP GET request, querying location server 40, and transmitting an HTTP response containing the requested location data. SMS positioning entity 36 is capable of the same type of interaction via SMS messages. IVR positioning engine 38 is capable of handling a call received from mobile terminal 14, querying location server using the CLI received in-call, and transmitting the mobile terminal's current location by means of in-call signalling (e.g. DTMF tones) to the mobile terminal 14. Mobile terminal 14 is capable of recognising responses received from these positioning entities as location data and of storing the data as its current position.

Fixed terminals 10 and 11, and indeed mobile terminals 12 and 14, may also obtain location data from Internet positioning server 34 or IVR positioning engine 38 without using the location server 40. The user may, through suitable interactions, specify a location (eg as a postcode or geographical place name) to the positioning entity, and receive the appropriate location data (e.g. global location coordinates) in return once the location has been suitably specified. In the case of IVR positioning engine 38, this interaction may take the form of a DTMF and/or voice interactions, whilst in the case of Internet positioning server 34, client-server request/response interactions such as to be described below may be used.

Embodiments of the invention also include service provision nodes capable of generating location-dependent responses to service request messages received from user terminals. These service provision nodes are automated. Thus, location-based services may be obtained from Internet content servers 30 and 32 (via client-server service request response messaging), SMS service entities 42 (via SMS messaging), 44 and/or IVR service engines 46, 48 (via in-call signalling messager, such as via DTMF tones and/or voice messages) for use in processing user requests. Each of the respective service entities is capable of processing the geographic location data sent by the user terminals and proving a location-based service response. IVR service engines 46 and 48 may be connected directly to PSTN 22 for direct access by user terminals 10 and 11. Geographical location data sent by a user terminal to a service provisioning node may identify the current or fixed location of the user terminal, or other locations stored in the user terminal in the form of location data.

User terminals 10, 12 and 14 may access content and services available at servers 30 and 32 by using suitable hypermedia browser terminal applications and specifying network resource identifiers addresses corresponding to particular content available at servers 30 and 32. For example, servers 30 and 32 may be Web or WAP servers and user terminals 10, 12 and 14 may run Web browser or WAP micro-browser terminal application programs. A Web or WAP server may respond to a terminal request, sent for example in an HTTP or WTP GET request message containing location data and functional data indicating that the service requested is a pizza delivery service, for example, by transmitting a Web page or WAP card or deck containing details of a pizza delivery service local to the location specified in the terminal request.

Similarly, SMS service entities 42, 44 may respond to a terminal request, sent for example in an SMS message containing location data and functional data indicating that the service requested is a taxi finder service, for example, by transmitting an SMS message containing a local taxi firm phone number.

Similarly, IVR service engines 46, 48, may provide location-based services, such as local weather reports, in response to receiving DTMF location data generated by the terminal. The particular service which is requested by the user may depend on the number called by the user terminal, and/or in-call selections made by the user, by DTMF tones or voiced indications.

Fixed terminal 10 may also communicate its fixed location, or other stored locations, to servers 30 and 32 when accessing content or services. Furthermore, fixed telephone 11 may communicate its location, or other stored locations, to IVR engines 46, 48 by DTMF signalling during a voice call. The fixed telephone may for example have a button or a menu option for initiating the transmission of a stored location via DTMF.

Thus, all four user terminals may readily obtain automated location-based services or content based on their fixed or current location or based on other locations from one or more of the service provision nodes.

Also connected to the communications system is a location registration server 50, for registering unique location names or location-dependent names, as will be described in further detail below. Server 50 includes a geographical location name store 52 for storing the registration details for the names.

### Terminal Applications for Utilising Location and Associated Data

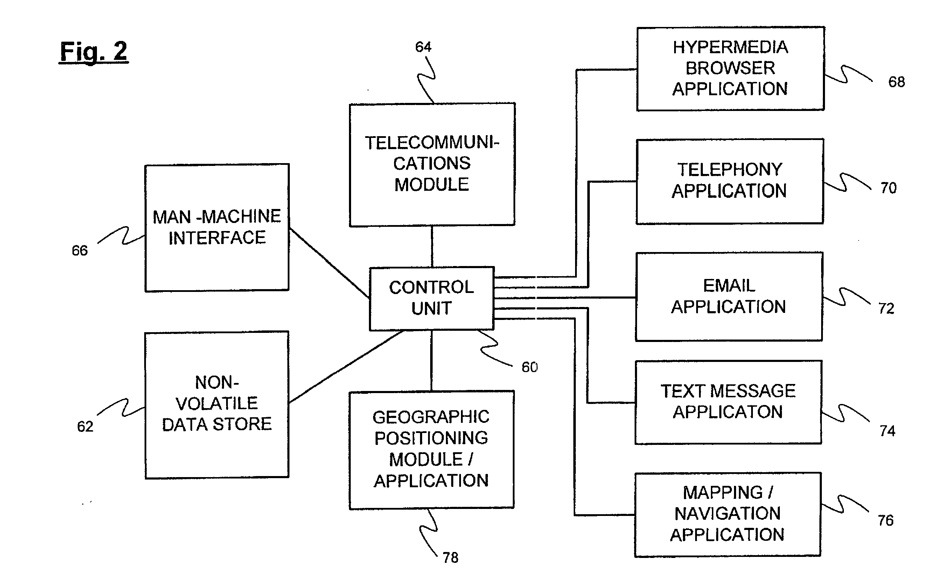

Components of an exemplary user terminal are schematically illustrated in Figure 2. The terminal comprises a control unit 60 coupled to one or more non-volatile data stores, for example flash memory, at least one telecommunications module 64 (in the case of a mobile terminal a radio module for communication with radio base stations in cellular networks), and one or more man-machine interface components 66 (such as a screen or touch screen, a speaker, a keypad, a microphone, a camera). One or more terminal application programs 68-76, are stored in memory on the terminal and will be run upon switching the terminal on. The terminal applications comprise one or more of a hypermedia browser application 68, a telephony application 70, an e-mail application 72, a text message application 74 and/or mapping/navigation application 76. Each of these types of application is generally well-known and will not be described in detail herein. The applications present information and receive instructions from the user via the man-machine interface 66. Information concerning the status and functions available to the user are presented on the screen (for example, menu options) or through the speaker (for example, ringing tones or keypad presses). Instructions from the user may be given via the touchscreen, keypad or microphone (i.e. voice commands). Based on the instructions received, the terminal may perform internal processes, such as changing the data or settings stored in memory 62, or it may transmit data to and/or receive data from a remote data processing device via the telecommunications module. The remote data processing device may be a service processing node or a terminal device such as a mobile telephone or a fixed telephone.

According to one embodiment of the present invention, conventional terminal applications are adapted to provide extra user functionality. This may be achieved by means of replacing the conventional application software entirely or by means of a plug-in software module which interoperates with the conventional software. Alternatively, the software module may be independent of other applications software running on the user terminal but capable of interoperating with one or more such applications. In overview, the extra functionality provided by the present invention relates to functions that may be performed in respect of location data.

### Geographical Location Data

According to the present invention, geographical location data, and associated data, may be used by data processing devices to perform location-based functions or provide location-based services or content. The data processing devices may be user terminal devices used by users or automated servers, for example. These data processing devices will in general need to store location and associated data and communicate location and associated data with other data processing devices.

A geographical location may be represented in the form of data in many ways.

Geographical location in different embodiments of the invention may be represented by spatial coordinate data, which are preferably constructed using a global location reference standard, i.e. a standard whereby substantially any location on the surface of the earth may be specified to a selected degree of accuracy. In particular, in preferred embodiments, the location data is derived from a global position reference system and is represented in a form in which a location is specified by at least two coordinates which, together with appropriate zone or datum data, specify a globally unique position on the earth's surface. Three-dimensional geographical location may be represented by combining a two-dimensional data representation and a representation of altitude or height above sea level data (expressed in a standard distance unit such as metres). Spatial coordinate data may include one or more of 1) latitude and longitude co-ordinates; 2) polar or geodetic coordinates; 3) grid references, such as Ordnance Survey (TM) grid references, 4) grid zone references; 5) Universal Transverse Mercator references.

In other embodiments of the invention, geographical location data may include one or more of 6) well-known geographical regional names or codes, such as a country name or codes (e.g., "US", "GB", etc.) or metropolitan and/or country region names (e.g. "Paris, Texas"); 7) postal codes generated by known naming conventions, like post codes or zip codes; and 8) a registered unique geographical location name, in accordance with an embodiment as will be described below.

In one embodiment of the present invention, geographical location is represented by data in the form of a predetermined modification of conventional latitude and longitude co-ordinates, represented in decimal degree format. In this modification, the coordinates are optimised for representation by as few as possible numerical digits (0-9) only (i.e. without negative values and without decimal points), whilst maintaining global uniqueness and a desired amount of accuracy. Thus, terminal applications which receive coordinates from a terminal positioning module, such as a GPS receiver, or a user terminal positioning service provided by a network, in digital degree format, convert the received data to the predetermined modified format before use. The coordinates are preferably normalised and incremented by a predetermined amount. Conventional latitude ranges from -90.0000... to +90.0000, whilst conventional longitude ranges from -180.0000... to +180.0000. For conventional latitude (Lat) and longitude (Long), the following conversion to a modified decimal format (Lat+, Long+) is used: $Lat + = \left(Lat+90\right) / 180 ;$ the "0." is omitted. $Long + = \left(Long+180\right) / 360 ;$ the "0." is omitted.

This format thus provides globally-unique decimal codes which identify geographical locations to a desired degree of accuracy by number strings only. These codes may then be communicated in a large variety of media, e.g. in text (e.g. X=537029809&Y=90997666), data coding (e.g. binary coding), DTMF tones (e.g. ***83698629***73629384***), bar codes, etc. The fact that the codes are optimised and communicable in all these media means increases their value as a means of disseminating location information. In particular, the codes may be readily ported between various different modes of communication, such as e-mail, hypertext, SMS, etc., as will be exemplified below.

In a further embodiment, a geographical location is represented by a single code capable of specifying global location coordinates. The code, referred to herein as a Placecode™, includes latitude and longitude components, and is a variant of the decimal codes described above. Namely, the code is made up of alphanumeric characters, thus allowing a more compact coding. In a preferred embodiment, 35 characters in all, including all 26 standard keyboard letters and numbers 1 to 9 (0 being omitted in order to avoid confusion with the letter O), and each coordinate component is created by coding the above-described decimal code using the 35 character base. Four characters may be used to specify each coordinate of a location anywhere on the earth's surface to within approximately 8.5 metre accuracy (suitable for the large majority of location-based applications) and the code itself may consist of only 8 characters in total. The latitude component may be placed before the longitude component to create the full code. Alternatively, characters from each component may be placed one after the other, beginning with the most significant characters, such that locations within the same vicinity are readily recognisable by their prefixes. E.g. Placecode G83HL3E1 represents a location in the vicinity of G83HL3MN. In this format, each two character combination represents a square zone on the earth's surface, namely G8 is a square zone of a set of high-level zones (each representing approximately 1/35x1/35 of the earth's surface), 3H a zone within that, L3 a zone within that, and E1 and MN zones (representing a location to an accuracy of approximately 8.5 metres) at the lowest levels.

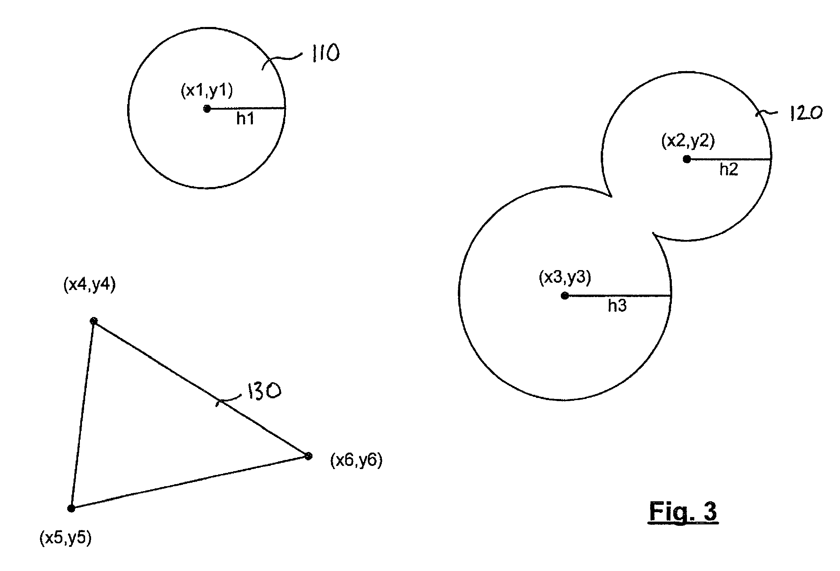

With location coordinate data representations which define points or small zones (such as latitude, longitude co-ordinates; polar or geodetic coordinates; and grid references etc.) it is preferable, but optional, to include range data such as horizontal and vertical range radii (expressed in a standard distance units such as metres). Using latitude and longitude co-ordinates, together with horizontal range radii, (and, optionally, altitude and vertical range radii) it is possible to define a circular (or vertical cylindrical) region describing a spatial extent of a characteristic of the location specified in the coordinates. Using multiple sets of coordinates, optionally together with a single or a corresponding multiple set of horizontal range radii (and, optionally, a single or corresponding multiple set of altitude and vertical range radii) it is possible to define more complex geographic regions. Figure 3 shows a simple two-dimensional region 110 defined by latitude and longitude co-ordinates (x1, y1) and horizontal range (h1), a more complex two-dimensional region 120 defined by two latitude and longitude co-ordinates (x2, y2) and (x3, y3) and a two horizontal range radius h2, h3 and a further complex two-dimensional region 130 defined by three latitude and longitude co-ordinates (x4, y4), (x5, y5) and (x6, y6) but no corresponding horizontal range radii. Figure 3 shows how multiple point, and optionally range, representations, or multiple region representations, may be grouped together to form complex regions in different ways. One approach is to logically add together the regions covered by multiple representations, as shown in the two-dimensional region 120 in Figure 3. Another approach is to treat the region enclosed by multiple point representations as the region defined, as shown in the two-dimensional region 130. To define an area in two-dimensions or a volume in three-dimensions, the latter approach requires at least three or four point representations respectively. It will be apparent that other combinations of point-defining data, range-defining data, or region defining data may be used in the present invention to define simple or complex regions.

Location data can be measured or specified to a certain level of accuracy. For example, location data provided by location servers of cellular networks will have a specified accuracy depending on the requested quality of service level and the capabilities of the network at that particular location and time. Similarly, location data obtained from a user by pointing to a map will depend on the scale of the map, and the resolution and accuracy of the pointing device. Thus, accuracy data may be associated with location data. The type of accuracy data will depend on the type of data used to represent geographical location. For longitude, latitude and altitude data, a horizontal and vertical error may be specified.

In the present invention, location data may be identified as static or dynamic. For example, the location of a house may be identified as static, at least for the period of use of the location data, whereas the location of a person or vehicle may be identified as dynamic. Static location data needs to be determined only once, whereas dynamic location data may require repeated updating. In both cases, a location or current location may be obtained automatically by querying one or more data processing devices, such as mobile data processing devices with GPS receivers or the location servers of cellular networks, described above. Alternatively, a location or current location may be obtained semi-automatically by querying one or more users of data processing devices to supply the data.

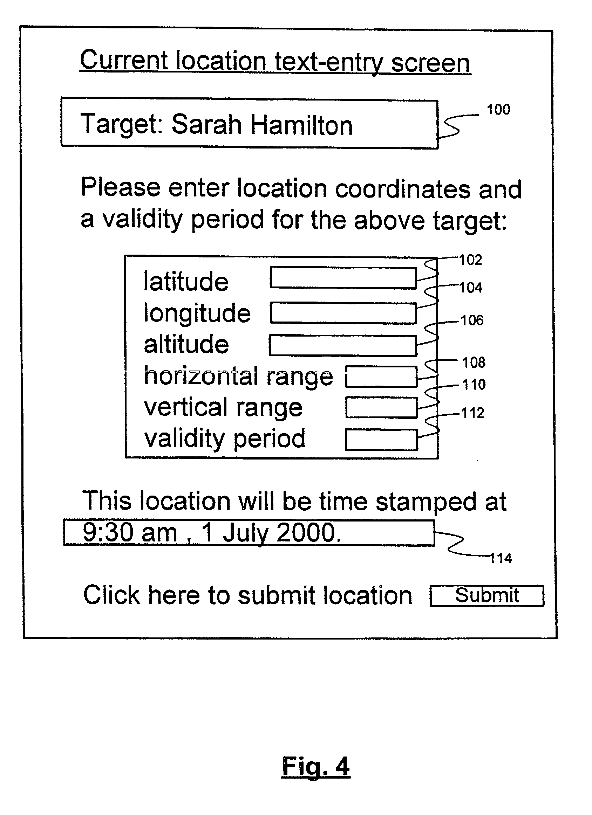

If the position of a terminal cannot be sensed using a location detection system, or if a location other than the position of the terminal is of interest, location data may be obtained at the terminal from the user in the form of user-inputted text - e.g. latitude, longitude coordinates, a registered geographical location name (as will be described in further detail below) or postal address or code etc. Other associated data relevant to dynamic location data may also be inputted by the user. Figure 4 shows an exemplary user interface for obtaining location data from a user in the form of text. The target identifier is displayed in box 100. Text-entry boxes 102-110 are provided for user input of single, or multiple, latitude, longitude and, optionally, altitude co-ordinates, horizontal and vertical range radii. A text-entry box 112 is provided for user input of a validity period for the location data. A time-stamp to be provided with the location data is displayed in box 114.

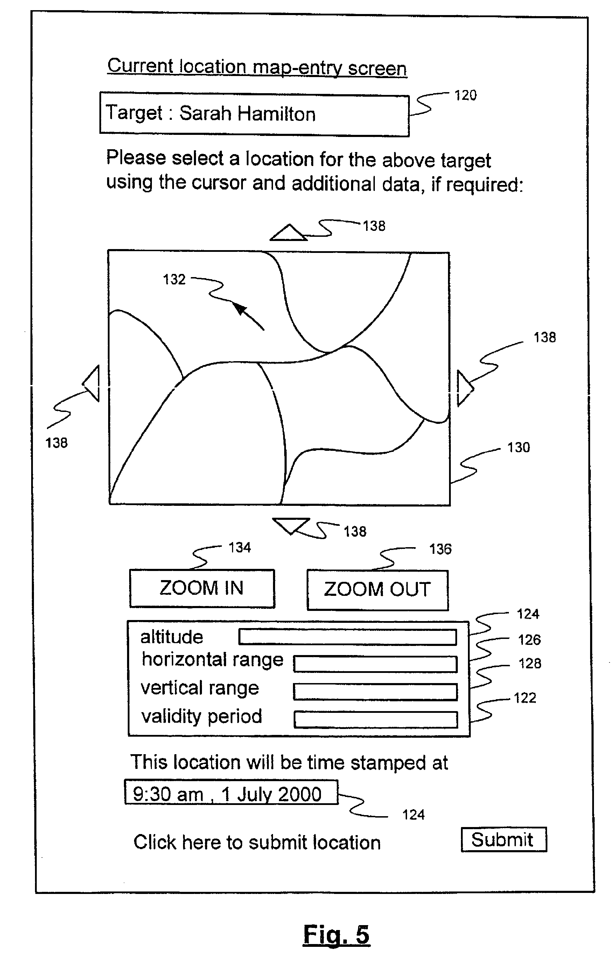

Location data may also be obtained from the user in, at least partly, a graphical form by presenting the user with a map (or a series of maps at different scales) via a graphical user interface of the data processing device and having the user point to one location (or a sequence more precise locations) or draw a region (or a sequence more precise regions) to define the location. Figure 5 shows an exemplary user interface for obtaining current location data from a user in, at least partly, a graphical form. As with Figure 3, the source identifier is displayed, in box 120. A pre-filled text-entry box 122 is provided for user input of a validity period for the location data. A time-stamp to be provided with the location data is displayed in box 124. Unlike Figure 3, a street map is displayed at box 130 and a cursor 132 provided for pointing and selecting a location. Also, buttons 134 and 136 are provided for zooming in or zooming out of the map display. Furthermore, four buttons 138 are provided for scrolling the map portion displayed to the north, south east or west. The map displayed at box 130 may be any kind of map which either accurately reflects the spatial positions of object displayed, such as Ordnance Survey (TM) maps, or not such as transport connection like train connection maps, tube or metro maps etc. Maps displayed on two-dimensional screens may be used to provide three-dimensional location data by including a text-entry box for altitude. Horizontal and vertical range radii may also be entered using text entry boxes so as to define regions. Furthermore, locational regions may be identified by using a pointing device to draw the perimeter of the region or by using a pointing device to fill in a region being identified. Alternatively, regions may be defined by selecting multiple points and, optionally, single or multiple range radii as described above.

When the user has input the required location information, in either or both of the formats illustrated in Figures 4 and 5, he may submit it by clicking the "Submit" button, whereupon it will be communicated to a remote device or internal application which translates the submitted location data into a predetermined format whereby location data is communicated between devices in accordance with the present invention. The remote device may for example be a Web server, for example content server 30, which generates a hyperlink containing a URL containing the location data (as will be described in further detail below) which is then sent back in a Web page, which may contain other location-specific data, to the user terminal. In the case of an internal application, this may be a mapping application or suchlike which outputs location data in a desired format.

### Storage of Location Data in User Terminals

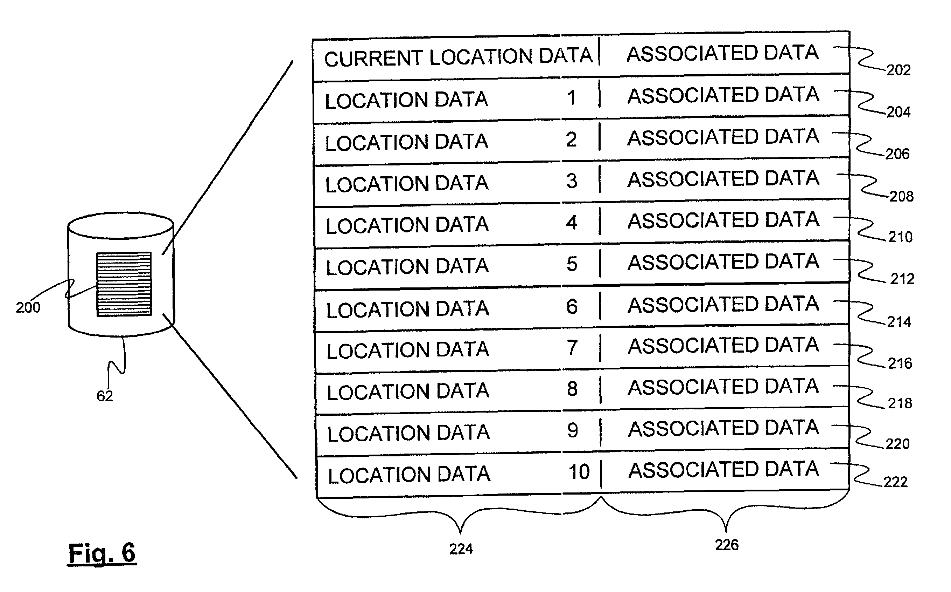

In accordance with embodiments of the invention, geographical location data is stored in, or in a local device accessible by, the user terminal, preferably in a non-volatile data storage means 62 as described, such as non-volatile memory or a magnetic or optical data carrier. Thus, each of the exemplified user terminals, include a location storage directory 200 storing geographical data in the form of a plurality of location storage records 202-222, as illustrated in Figure 6. One location storage record holds location data 224 representing a single location in the form of one or more fields of global geographical location coordinate data as described above, and one or more associated fields of data 226. Current location record 222 holds current, or at least most-recently obtained, location data for the terminal. A plurality of other location records 204-222 hold previously-stored location data, which may include previous current location data for the terminal and/or location data received from other sources, such as other terminals and content servers.

### Location-related Associated Data

Other data specifically related to a location may be stored in an associated manner with the location data. This data may be associated with the location data either by a user selecting a function for associating one or more selected items of additional data with an item of location data via user interface interactions, and/or by the user terminal automatically associating one or more items of contextual data with an item of location data, and/or by the user terminal automatically associating one or more selected items of additional data with a contextual item of location data, and/or may have been received by the user terminal in an associated manner with an item of location data. The associated data may be stored in fields of the location storage record or may be referenced by a field in the location storage record which provides a file reference to either a locally stored resource or a remotely stored resource.

For example, the following associated data may be stored in the location storage records: data representing the geographical location of a building may have data corresponding to the building associated with it, such as one or more postal addresses (preferably, broken down into street number, street name, town or city name, post or zip code and country name), e-mail addresses, fixed or mobile telephone numbers, web site addresses; a location type to indicate the type of location - e.g.. a flat, a house, a building, a street, a city, a county or state, a country, a region, a person, a vehicle; a user-allotted name, such as "London" or "My office" or "Sarah's house" or "Fred"; and a name registered in respect of a location (as will be described in further detail below). Furthermore, dynamic location data may have the following further data stored in the location storage records: a date/time-stamp at which the location was obtained (which may be expressed in a standard format such as number of seconds past 12:00 am, 1 January, 2000), a validity period within which the location data is considered to be current (which may be expressed as a number of seconds), a speed and direction of the locatable mobile device (which may together be expressed as speeds in the northerly, easterly and, optionally, vertical directions) and an acceleration and direction of the locatable mobile device (which may together be expressed as accelerations in the northerly, easterly and, optionally, vertical directions). For dynamic location data, if a previously obtained location is within its validity period (determined by comparing the current time to the time stamp associated with the previously obtained location plus the validity period) then the location data is treated as being current and updating is not needed. If not, then it is treated as being old and may need to be updated before use is made of the location data.

The following locally or remotely stored associated data may for example be referenced in the location storage records: a photographic image or video file; a map file; an audio file; a text file; a diary or calendar event; a hypermedia file; an e-mail file; a program file; a contacts record, such as a vCard; an electronic ticket (to be further described below).

Preferably, the user terminal application is arranged to detect when the location stored in the current location record 222 is sufficiently proximate to a location stored in other location records 202-222 and data associated with the proximate other location is "inherited" by the current location record 222 for use when performing functions or generating messages using the current location. In this way, the terminal application may make use of data associated with stored locations when the user terminal is proximate to the stored location without the user having to actively select the stored location. In other words, when a user is at home or at the office and has previously stored location and associated data in respect of the home or office, the terminal application will recognise that the current location is proximate to the home or office and will be able to make use of all the associated data, such as postal addresses, telephone numbers etc, without the user having to actively select the home or office location from a favourites list.

### Communication of Geographic Location Data from the User Terminals

The geographical location data stored in a user terminal may be communicated as data in messages sent to network-based service provision nodes (referred to herein as "service request data" and "service request messages" respectively) or to another terminal (referred to herein as "terminal-to-terminal messages"). The format in which the data is presented is preferably predetermined in each mode of communications which the terminal is capable of using (although different presentation formats are preferably used in different communications modes of a terminal, such as Web browsing and voice telephony connections), such that the location data may be recognised as such, and distinguished from the many other types of data which may be communicated in these different modes, and used at the receiving end of the communication.

Since location data may be communicated from a user terminal, another way in which a user terminal may receive location data is from another user terminal. Generally, this location data will not indicate a current location of the receiving user terminal, but may indicate a different location of interest. For example, a mobile telephone terminal may be used to send geographic location data, either its own current location or a different location stored in its location records, to another mobile telephone terminal or a PSTN telephone terminal by DTMF, or to a mobile telephone terminal by SMS, e-mail, or any other communications capability which the mobile terminals are each provided with. A "location-smart" terminal receiving the location data will preferably either automatically, or give the user the option to, store the location data, and any associated functional data (to be described below) received in the communication, in its location record store.

### Functional Data sent with Geographical Location Data

Data sent along with the location data in a communication is referred to herein as "functional data". Many different types of data may be sent in combination with the locational data. This functional data may have a purely informative function, or may have a different function such as specifying selected location-based functions to be performed in relation to the location data or location-based services to be provided in relation to the location data.

Any of the associated data, stored or referenced in a location record as described above, may sent along with the corresponding location data. The associated data to be sent may be determined by pre-stored settings (e.g. privacy settings) in the terminal device, user-interface interaction at the time of sending of the message and/or on the identity or kind of the service to be provided or the function to be performed. Furthermore, additional functional data not previously stored in a location record may be sent. The types and values of the additional functional data to be sent may be determined by user-interface interaction at the time of sending of the message and/or on the identity or kind of the service to be provided or the function to be performed.

Some examples of additional functional data generally useful for instructing a location-based server to provide a service are as follows: a service code (for any service which may be provided such as a map service or a taxi directory service); a user identifier (such as a user name or code); a user password; a user category of interest (which may be general categories such as food, entertainment, shopping, travel, news, weather etc., or specific categories like pizza restaurants, late-night cinemas, nightclubs, motorbike shops, plumbers, hairdressers etc.); a supplier identifier (such as a supplier name or code - e.g.. "Countrywide Cabs"); user search criteria suitable for processing by a search engine (which search criteria may be expressed in a conventional manner using search terms and instructions combined using logical operators); a user terminal type (such as fixed or mobile phone, fixed PC, notebook PC, PDA etc.); user terminal application type (such as Web or WAP browser application, E-mail application, SMS peer application, voice/video peer application etc.); user function code (such as "list"; "go"; "find"; "services"; "add"; "send"; "associate"; "options" - these functions will be described in detail below in respect the menu functions of "location-smart" terminal applications which are enabled to perform these functions in respect of location and associated data; however, they may for example be included in URL hyperlinks in Web pages to enable users of conventional or "location-dumb" terminal applications to make use of the functions too. Namely, the function may be provided in the server response, rather than via the terminal menus); various kinds of personal information specific to the user (such as user name, date of birth, postal & e-mail addresses, fixed or mobile telephone numbers, sex, age, payment instructions, debit or credit card details, bank details - preferably, for security purposes, sensitive personal information is communicated from the user's data processing device in encrypted form, or is stored at a remote data processing device referenced by an authenticated user name or code and is used as instructed by the user); personal information specific to people other than the user (such as the various kinds of personal information described above); and other service/function-specific data kinds (such as an item description, a number or quantity, a date , a time, a price, a quality of service level, a language, a currency etc.).

For the purpose of allowing recall and repetition of previous location-based functions or providing location-based service requests, one or more of the additional functional data items described above may be stored in the location storage records and presented to the user in the context of the respective locations when they are accessed in future, for example by means of a history list, or a user favourites list in a hypermedia browser.

### Representations of Location and Functional Data

For ease of explanation in this document, examples and illustrations will be given using character encoding. However, it is to be understood that, in alternate embodiments of the present invention, other data formats may be used. In all cases, when communicating location and associated data, the data must be recognisable as being location and associated data. This may be achieved by prepending a recognisable starting code signifying that the data following it is location and associated data and appending a terminating character, such as a carriage return, signifying the end of the location and associated data. Also, the various fields within location and associated data, such as latitude, or e-mail address, must be recognisable as such. This may be achieved by prepending recognisable starting codes signifying that the data following them is a particular type of location or associated data and appending a terminating character, signifying the end of the field. Furthermore, context, such as the context of a function or service code, may be provided to selected fields only by associating only those selected fields with the context-giving field. This may be achieved by nesting fields within each other using a pair of nesting characters, such as "{" and "}". Alternatively, associations between codes may be achieved by numbering the codes equally. For example, where two locations are to be given, the location coordinates may be indicated by the codes X1, Y1 and X2, Y2 respectively.

For ease of explanation in this document, examples and illustrations will be given using this approach to structuring location and associated data for storage communication purposes. However, alternate embodiments may use other data structures to represent location and associated data for communication purposes, such as mark-up languages (in particular, Extensible Mark-up Language or XML as used in NVML, GML and POIX described above), vCard format or nested attribute-value pairs.

The data type codes are preferably short alpha-numeric codes indicative of the purpose of the field. For instance, the following sets out a number of location and additional parameters of which the values are specific to location (corresponding to the associated data stored or referenced in the location records). These parameters may be represented by the following set of unique data type codes: latitude Y; longitude X; altitude A; Web site addresses WA; e-mail address E; user-allotted name N; mobile telephone number MT; fixed telephone number FT; horizontal range H; source identifier SI; vertical range V; target identifier TI; horizontal error HE; source device identifier SD; vertical error VE; target device type TD; location type LT; a date/time-stamp TS; postal addresses PA; validity period VP; street number NS; northerly speed NS; street name SS; easterly speed ES; town or city name TC; vertical speed VS; post or zip code PZ; northerly acceleration NA; country name C; easterly acceleration EA; vertical acceleration VA. A number of generally useful additional functional data parameters of which values may also be added to any locational data to specify further services and other functions to be provided. The following sets out the corresponding unique data type codes: service code S; user identifier UI; user password UP; personal name PN; supplier name or identifier SN; function code F; search criteria SC; item description I; category of interest CI; quantity NO; terminal application TA; date D; terminal type TT; time T; date of birth DB; price P; sex SX; quality of service level QS; age AG; language LN; personal identification number PI; currency CU.

Note that various examples of associated data, such as location type, postal address, street number, street name, town or city name, post or zip code, country name, e-mail address, fixed telephone number, web site addresses, user-allotted name, mobile telephone number are also usable as functional data and may have the same codes as described above.

### Message Formats for Location and Functional Data

A predetermined code or codes are used in messages constructed in accordance with the present invention in order to signify the presence of useful locational data in a message to a "location-smart" terminal application or a service provisioning entity. In preferred embodiments of the present invention the recognisable code, signifying that the data following it is location and associated data, is chosen to be an Internet Uniform Resource Locator (URL) comprising a predetermined domain name, or one of a set of predetermined domain names, stored on the user terminal. The choice of a URL serves three main purposes. Firstly, using the DNS, it identifies an IP address of a server connected to the Internet which is capable of performing, or arranging for another server to perform, location-based functions or services defined by the location and functional data which follows the domain name. Thus the domain name plus location and associated data which follows it may be used by a Web or WAP browser application to instruct a server to perform the location-based function or service. The location and associated data may be manually entered into the browser, obtained as a hyperlink from a media source such as an Internet page, e-mail, SMS etc. or automatically constructed by the terminal application on the basis of user instruction. Secondly, it provides a recognisable code so that "location-smart" terminal applications, which are able to perform functions in respect of location and associated data, may treat the parameters and other data associated with it as location and associated data and perform the functions accordingly. Thirdly, the use of conventional domain names provides backwards compatibility for communication of location and associated data through many conventional data processing media in such a way as it an be recognised as location and associated data and used as such. For instance, location and associated data may be communicated in e-mail, SMS, in-call data channels for voice or video connections, broadcast radio or TV data channels etc. For example, the location and associated data may be received via SMS, copied to a data clipboard and pasted into a WAP or Web browser for accessing a server connected to the Internet which is capable of performing, or arranging for another server to perform, location-based functions or services. This backwards compatibility extends to non data processing media such as conventional print media or the spoken word. For example, location and associated data may be printed in magazines or newspapers and typed into a WAP or Web browser for accessing a server capable of performing, or arranging for another server to perform, location-based functions or services.

More than one Internet domain name can be chosen as a recognisable code signifying that the data following it is location and associated data. Thus "location-smart" terminal applications, which are able to perform functions in respect of location and associated data, may recognise any one of the chosen domain names and treat any data following such domain names as location and associated data and perform functions accordingly. This enables more than one server, with IP addresses corresponding to the chosen domain names, to be accessed by "location-smart" terminals to perform location-based services or functions.

In accordance with an alternative embodiment of the invention, one or more top level domain name (such as .loc) may be used as a terminal-recognisable code so that all domain names within those top level domains (e.g.. buses.loc or servicestations.loc) are recognisable codes signifying that the site is location-enabled and that the user's location and associated data may be sent to the server in service request messages constructed by the terminal in the appropriate format. Furthermore, "location-smart" terminal applications may recognise any one of the chosen top level domain names and treat any data following such domain names belonging to those top level domains as location and associated data and perform functions accordingly. This enables more than one server, with IP addresses corresponding to all the domain names within the chosen top level domains, to be accessed by "location-smart" terminals to perform location-based services or functions.

Thus, in accordance with this embodiment of the invention, "location-smart" hypermedia browser applications preferably construct URLs containing location data, or append data to recognised location-aware URLs to form new URLs containing location data. These URLs are used to form service request messages to be sent via the Internet, such as Hypertext Transfer Protocol (HTTP) GET requests and Wireless Application Protocol Transfer Protocol (WTP) GET requests.

However, the location data may alternatively be included in such service requests by other message formats, for example by the terminal browser generating form data which is sent in an HTTP POST request message, or otherwise included in a service request message header, or in the message body (for example as an XML file) when the terminal detects that a request is to be sent to a predetermined network resource or domain (in the case of a cookie, this being the domain from which the cookie is received).

In addition, the data may be sent by a client software object, such as a Java™ or J2ME™ (Java for mobile terminals) applet residing on the user terminal. Applets may be used to process location data and associated data or functional data at the user terminal before a service request message is generated for transmission to a remote service provider. For example, a user may wish to access a service for ordering a taxi and may be required to specify a pick-up location, including location data, such as latitude and longitude co-ordinates, and a postal address, as well as destination location data, number of passengers and a contact telephone number for the user. This information is clearly specific to the type of location-based service being accessed and it may be preferable to capture the required information from the user using an applet downloaded from the service provider when the service is first accessed.

Applets for particular services may be stored in the user terminal for future use. Stored applets may be associated with services stored in a user-selected favourites list of services or history list of services accessed in respect of locations, both of which are described in greater detail below. Preferably, the applet is arranged to interoperate with the hypermedia browser to make use of location and associated data stored in the user terminal. Thus, the applet may present a user interface to the user for capturing the required service-specific information which is at least partly pre-filled with location and/or associated data likely to be appropriate to the user requirement. For example, fields for capturing the pick-up location may be pre-filled with location data representing the current location of the user terminal and fields for capturing the destination location may be pre-filled with location data representing the current locational context, which may of course be different to the current location. Furthermore, associated data stored or referenced in the location records of the user terminal, or other data stored by the hypermedia browser, may be used by the applet for pre-filling appropriate fields in the user interface. Thus, for example, a postal address associated with the current location and/or the current contextual location may be pre-filled in appropriate fields in the user interface. In the case of the current location, inherited associated data, as described above, may be used. Also, user-specific data, such as a contact telephone number for the user stored in the user terminal and accessible by the hypermedia browser, may be used for pre-filling the contact telephone number field in the applet.

Thus, it can be seen that service-specific applets may make use of location data, associated data and other data stored in the user terminal to assist the capturing of required service-specific information for inclusion in a service request message. Other message formats are more suitable in other communications modes, such as voice telephony (the DTMF format described above is preferably used, with for example the *** tone format functioning as the signifying codes), for service request messages, positioning responses and terminal-to-terminal messages. In the case of SMS and e-mail, and in particular for service request messages, any predetermined format may be used, such as an XML file. However, providing a suitable network resource is provided corresponding to the URL, geographical location data is also preferably sent in the form of a URL format for these communications modes. For these existing terminal-to-terminal communications the receiving terminal may not be "location-smart" and it may not be possible to determine from the sending terminal whether the receiving terminal is "location-smart". By sending a URL in these modes of communication, the information becomes compatible with any terminal, since the user may either cut and paste, or manually type in, the received URL into the address line of a hypermedia browser and get the appropriate location-specific information or service by means of a service request message sent to the network resource indicated in the URL.

### Examples of URLs containing Location and Functional Data

Some examples of structuring and formatting of URLs in accordance with the present invention will now be given to illustrate how location and associated data may be included therein. Such URLs may be generated by a "location-smart" user terminal, either in full by the user terminal or in part by the terminal on recognising inputted URLs in which location data is to be automatically included, preferably identify predetermined existing network resources, which are preset in the browser, which are adapted to recognise the URL data format constructed by the user terminal application and to provide location-specific services in their responses. The URL data formats preferably include the location data and any functional data in the form of data type codes with given data values, for example in the form of a Common Gateway Interface (CGI) query structure, with the data type codes described above being used to indicate the CGI query parameters. Any of the data type codes described above, in any combination, may be included in the generated URLs, as will be exemplified below.

Example 1. The following illustrates a URL generated using a representation of two coordinates of location to define a geographical location:
*www.golocal.to*/*?X=1234566&Y=9876543*

The network resource is a location-enabled Web server with the domain name "golocal.to", "to" being the top level domain (TLD) name (a country code TLD for Tonga in this case; it may also take a more conventional form such as the generic TLDs ".com" or ".net"). The terminal application is preset to send location service request messages, containing the URL in a header part of the message, to this network node. Correspondingly, the server has the resources to understand the CGI query part of the URL (that following the domain name) and to provide location specific responses, for example in the form of a Web page containing a map showing the location in question. It is to be understood that the domain name "golocal.to" is used herein for illustrative purposes only, and any domain name or domain name part may be used to implement the generation of URLs according to the invention, providing the corresponding server is at least location-enabled, and preferably also enabled to process the associated data fields and provide responses appropriately.

Example 2. An additional height dimension may be added:
*www.golocal.tol?X=1234566&Y=9876543&A=340*

Example 3. Associating a user-allotted name with the location data may be achieved by the following representation:
*www.golocal.to*/*?N=MyHouse &X=123456 &Y=9876543*

The server may then formulate a location-specific response containing the user-allotted name for the location.

Example 4. To indicate that the location data relates to "MyHouse", nesting may be used to associate the location data with the user-allotted name:
*www.golocal.tol?N=MyHouse{X=123456&Y=9876543}*

Example 5. Adding a horizontal spatial extent and horizontal error may be achieved as follows:
*www.golocal.to*/*?N=MyHouse{=123456&Y=9876543&H=53&HE=10}*

Example 6. Identifying the location type as a house may be achieved as follows:
*www.golocal.to*/*?N=MyHouse{X=123456&Y=9876543&H=53&HE=10&LT=house}*

The server may then formulate a location-specific response which is also dependent on the type of location identified.

Example 7. Adding postal address information for the house, broken down into various subfields which are nested within the postal address field may be achieved as follows:
*www.golocal.to*/*?N=MyHouse{X=123456&Y=9876543&H=53&HE=10&LT=house&PA={NS =19&SS=BurgessAvenue&TC=London&PZ=SE1 6TY&C=UK}}*

If included in a service request message, this URL may be used by the server to produce a response which includes the user's address details, and/or to pass on data to enable a service, such as a delivery, which the user orders via interaction with the server. The URL may also for example be posted as a hyperlink on a Website and all the information within it may be accessed and parsed by other "location-smart" user terminals. The URL may also be sent via an e-mail or SMS message to other "location-smart" user terminals to pass on both geographic location data and postal address data.

Example 8. Adding e-mail address, web site address, mobile telephone and fixed telephone details may be achieved in a URL as follows:
*www.golocal.to*/*?N=MyHouse{X=123456&Y=9876543&H=53&HE=10&LT=house&PA={NS =19&SS=BurgessAvenue&TC=London&PZ=SE16TY&C=UK}&E=andrew.smith@freeserve.co.uk&W A=andrewsmith.co.uk&MT=447947395345&FT=445649376}*

Example 9. Dynamic location data. Note the presence of a time stamp and validity period for the location data. The absence of any source or target information indicates that, in default, the location is available automatically and locally to the device, e.g., from a GPS receiver.
*www.golocal.tol?X=345666&Y=476543&TS=16844&VP=60*

Example 10. In this example, location data for a user, identified by her mobile telephone number, and the current location of the user terminal is available in network location server "locationserver2". The user's location is dynamic:
*www.golocal.to*/*?N=Sarah{X=234566&Y=876543&SD=locationserver2&SI=535.243.65.34& TD=MS&TI=447947086456&TS=946568&VP=603}*

Example 11. An example of a URL containing dynamic location data, for example of an aircraft, including speed and acceleration information is as follows:
*www.golocal.tol?N=MyLeerJet{X=54316&Y=9876543&A=68368&H=52&V=65&HE=43&VE =13&NS=5&ES=657&VS=675&NA=34&EA=54&VA=5&SD=locationserver3&SI=735.23.635.134& TD=MS&TI=44794876859&TS=467568&VP=360}*

Now we will give some examples of cases in which additional functional data is added to the geographic location to form the URLs. In all of these examples, the kinds of data parameters and their values included in the additional functional data is selected by the user, either as a general setting or in individual cases, by means of user interface interactions.

Example 12. In this example a user has requested, via user interface interaction, the terminal to request a search for information on dolphins but not zoos around Sarah's house using a location-based search engine. The URL generated by the user terminal is as follows:
*www.golocal.to*/*?S=search{N=Sarah'sHouse{X=63474&Y=75497}&SC=* "dolphin"NOT"zoo"}

This allows the server to perform a search specific to the location and to show the search results in relation to the location. In an alternative, the "search" service code may be dropped, since the presence of search criteria may be taken to imply that the service required is a location-based search.

Example 13. In this example a user has requested the terminal to request a search for cinemas around his current location. The location of the terminal is available in the network location server "locationserverl":
*www.golocal.tol?S=categorysearch{CI=cinema&SD=locationserver1&SI=135.43.55.94&TD= MS&TI=44798667456&TS=8763568&VP=60}*

Example 14. A request instructed by the user on the terminal, giving her name and mobile telephone as contact details, to order a taxi for two passengers, being picked up at 9:30 am on 1 July 2000 from Sarah's house and going to David's office, giving the full postal address to assist pick-up and a fixed telephone contact number:
*www.golocal.to*/*?S=taxi{PN=SarahHamilton{MT=447947395345&}&NO=2&wD=1*/*7*/*2000& T=09:30&N=Sarah'sHouse{X=63474&Y=75497&LT=house&PA={NS=19&SS=BurgessAvenue&TC =London&PZ=SE16TY&C=UK&FT=445649376}&N=David'sOffice{X=836774&Y=82356}}*

In this example, it has been assumed that the supply of two items of location data in the context of a taxi service - i.e. for "Sarah'sHouse" and "David'sOffice" in that order - indicates that the first location is the pick-up location and the second is the destination location. However, it is alternatively possible to explicitly specify this using further taxi-service-specific data codes such as SL= (source location) and DL= (destination location). It is to be noted, that since most, if not all, of the information is preferably stored as associated data in the user terminal, the process of generating this service request can be made relatively convenient to the user. Namely, the user interface can be adapted such that all the user would need to do is to enter the service requested (taxi), to select the pick-up and destination locations from a list of locations presented on the user interface, and to enter the time the taxi is required. This example is one which is also particularly suitable to be alternatively embodied by way of a Java™ or J2ME™ applet, as described above, since the user interface interactions may then be controlled by the applet. Example 15. A request by the user, providing a mobile telephone number as a contact number (and using the same telephone to automatically provide location data), to order two take-away Hawaiian 12 inch pizzas to be delivered to her current location and to pay for it. The request includes a current location, a validity period, for the current location fix and identifying details for the location server from which a location update can be received:
*www.golocal.to*/*?S=pizzadelivery{PN=SarahHamilton{MT=447986674&CM=Ms.S.Hamilton} &I=HawaiianPizzal2inch&NO=2&X=334566&Y=476543&SD=locationserver1&SI=135.43.55.94&T D=MS&TI=44798667456TS=8763568&VP=60}*

Example 16. In this case, the user has previously registered with a trusted organisation running the server corresponding to the domain name golocal.to and may have provided payment details and other personal details to that organisation in a secure manner. Thus, to provide some security to e-commerce or m-commerce transactions such as ordering pizza is to provide a user name and password in the request, and rely on the trusted organisation to arrange for payment using pre-stored payment details. An exemplary request containing these parameters is as follows:
*www.golocal.to*/*?S pizzadelivery{UI=SarahHamilton&UP=mypassword&I=HawaianPizza12i nch&NO=2&X=334566&Y=476543&SD=locationserver4&SI=135.43.55.94&TD=MS&TI=44798667 456&TS=8763568&VP=60}*

Although more secure than sending payment details in the open, this request message contains a user name and password and this information might allow a third party to spoof Sarah's identity and make purchases using Sarah's payment details without even knowing them. Thus, whenever sensitive data is to be communicated, it is preferable to send all such data in a hidden manner using a secure connection. One suitable approach for Internet connections is the secure sockets layer (SSL) connections.

Example 18. In another example of location data associated with function/service-specific data, a user may identify a particular supplier of a service rather than a general service or category of interest. For example, Sarah may want to order pizza from a particular pizza delivery business named "Pizza2go". An exemplary request:
*www.golocal.tol?SN=Pizza2go{UI=SarahHamilton&UP=mypassword&I=HawaiianPizza12in ch&NO=2&X=334566&Y=476543&SD=locationserver1&SI=135.43.55.94&TD=MS&TI=447986674 56&TS=8763568&VP=60}*

Example 19. A wishing to perform a function in respect of location data, such as to add a location, given the user-allotted name "Sarah's House", and associated location-related data, such as a postal address and fixed telephone number, to his favourites list maintained at a server of the organisation owning the domain name golocal.to, may format a request as follows. Note that the user may type this URL into the address entry line of a terminal application such as a conventional Web or WAP browser, or may access URL as a hyperlink on a Web page or WAP card. By the server sending a Cookie to the user terminal, the user terminal can be identified each time a request is sent up to the golocal.to domain, and thus the favourites list can be maintained on a per-user (represented by the user terminal) basis.
*www.golocal.tolFC=addN=Sarah'sHouse{X=63474&Y=75497&PA={NS=19&SS=BurgessAv enue&TC=London&PZ=SE16TY&C=UK&FT=445649376}}*

While the above examples have used a predetermined URL as the means for identifying data as being location and/or associated data, it will be understood that in alternative embodiments, such as those described above, other means may be used to identify data as being locational and/or associated data. Furthermore, it will be equally apparent that many other data formats may be used for specifying location and associated data.

In accordance with alternative embodiments of the present invention, location data may be identified by prepending a predetermined protocol header, for example "GEO:", in the same manner as "HTTP:" identifies the hypertext transfer protocol. Thus, a "locations smart" user terminal, running conventional software applications such as a Web or WAP browser, e-mail application, text messaging application or other conventional communications applications, may be arranged, using well-known techniques for associating protocol headers with software modules, to launch and/or pass control over to an independent software module implementing terminal-side embodiments of the present invention. This may be performed automatically or on user activation of an item of locational data which may have been received, for example, in a Web page, WAP card, e-mail, SMS or text message or which may have been entered by the user. The locational and associated data following the protocol header is passed to the software module for use as generally described herein. Preferably, the protocol header is used in combination with a predetermined URL, as described above, so that locational data may be utilised by both "location smart" and "location dumb" user terminals as well as with non-data processing media.

In a further alternative embodiment, which also may be combined with the above described embodiments, the locational data is transmitted as a file recognised by software applications running on a user terminal by means of a predetermined and registered MIME type. Similar file extensions may be used for conventional operating systems such as Microsoft ™ Windows ™ - for example "MyOffice.loc".

In a yet further embodiment, the location data may be included in a document in the form of script, such as Javascript™ or WMLscript™ which is recognised by the user terminal as having certain functionality to be carried out by the client browser in relation to the geographical location data embedded in the script.

In general, any data code, label or format recognisable by the user application, whether terminal-side or network-side, may be used to identify location data as such and thus enable the user application to utilise the location and associated data accordingly. However, preferred embodiments use standardised codes, labels or formats, such as URLs, to achieve compatibility and interoperability.

### Terminal Application User Interfaces

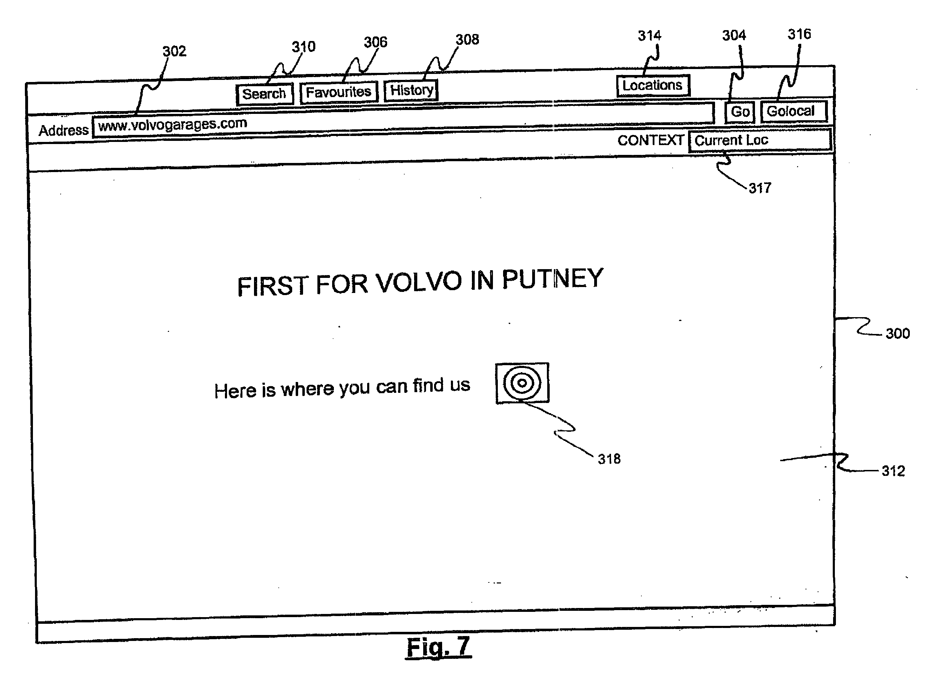

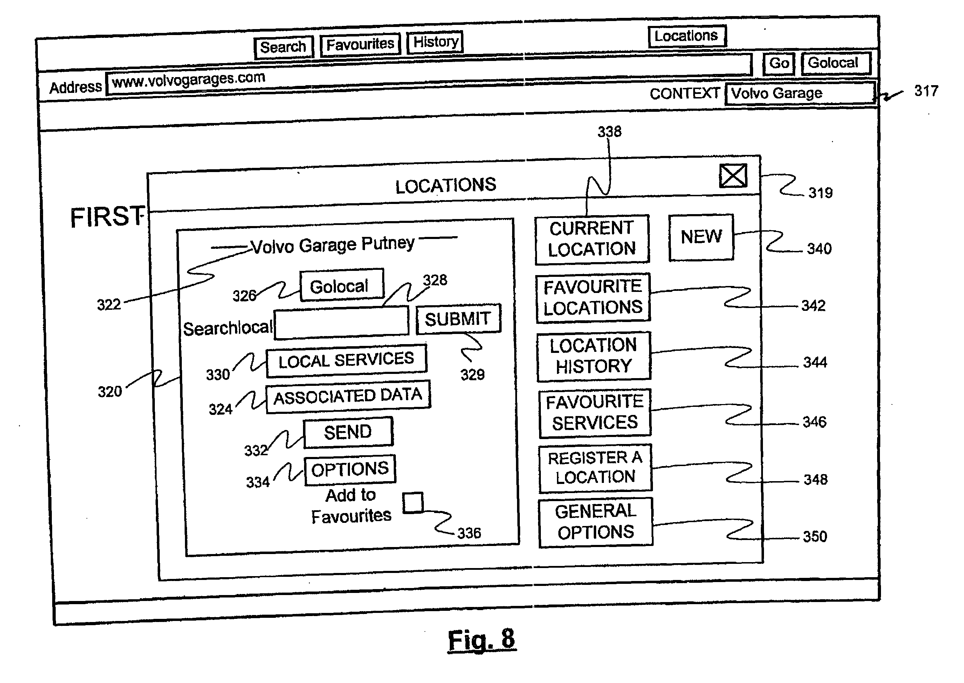

Figure 7 illustrates a graphical user interface provided on a user terminal by a hypermedia browser application 68, in accordance with one embodiment of the invention. The user interface includes various native menu options provided on conventional hypermedia browsers, such as an address entry box 302, for entering a network resource identifier (URL) which identifies a resource to be retrieved from a remote server, a "GO" button for initiating a service request message, in the form of an HTTP GET request containing the URL specified in the address entry box 302, a favourites list top bar icon 306 for displaying a selection of representations of previously stored favourite resources, a history top bar icon 308 for presenting a selection of representations of recently-accessed resources, and a conventional search top bar icon 310 for allowing a user to select a known conventional search engine from which normal key-word searches can be obtained. By native, we mean to say that this functionality is provided by the terminal application itself, rather than by hypermedia content received. Both an original terminal application and one modified by means of a software plug-in may provide such native functionality. The browser user interface also includes a hypermedia content display window 312, in which hypermedia resources retrieved from remote servers are displayed. In addition, in accordance with the present invention, the browser interface includes a native "locations" top bar icon 314. Selection of the locations icon 314, by means of a pointing device (a mouse, a trackball, etc) causes a native pop-up "locations" menu to appear on the user interface 300 similar to that illustrated in Figure 8.

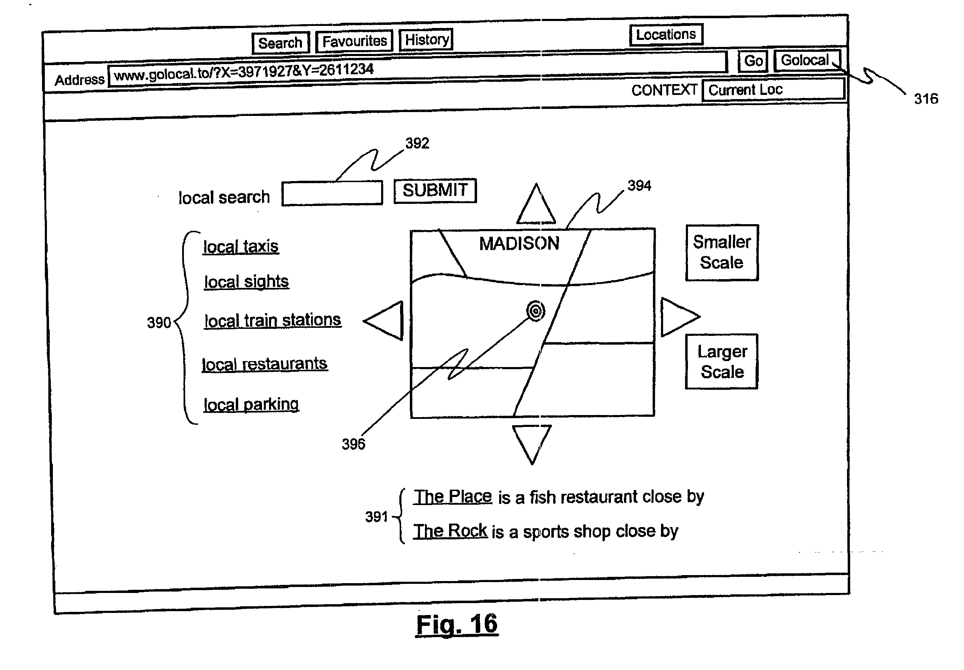

The user interface also includes a native "Golocal" button 316, a single actuation of which by means of a pointing device (i.e. a "click") causes the automatic generation of a service request message, in the form of an HTTP GET request, and the transmission of the service request message to a selected remote server such as a server identified by the domain name "golocal.to". The generated service request message contains geographical location data corresponding to a currently-selected context, which is indicated in current location context indicator box 317. The server response, in one embodiment, contains contents which are illustrated in Figure 16. In an alternative, if text is inserted into address entry box 302, and "golocal" button 316 is actuated, a service request message is generated which contains both the text, as search parameter data, and the current contextual location data, and transmitted to the remote server, the remote server can then parse the request parameters, generate location-dependent search results and send the results in a response message.

Figure 7 also illustrates an exemplary hypermedia content page in hypermedia content window 312 which contains an item of geographical location data and associated data 318. The item of geographical location data and associated data may either be viewable in content window 312, for example as a hyperlink, or hidden by means of being embedded in the hypermedia content page as has been shown in Figure 7. In this embodiment of the present invention, items of geographical location data contained in hypermedia content received by the browser are preferably indicated in the hypermedia content window 312 by means of a characteristic representation, preferably a predetermined icon (such as that shown) indicating that the representation is specific to location data. The characteristic representation may either be embedded as a resource within the page by the content server, or the browser application on the terminal may be adapted to recognise geographical content information and, in response thereto, presents the geographical location data by means of a native characteristic representation. The browser can then select the characteristic representation, icon 318, by means of a pointing device, in order to cause the browser to display a menu specific to location data, in which functions may be performed in relation to the geographical location data represented by the icon 318. Preferably, the menu is a native pop-up menu in the same format as that generated when the locations top bar icon 314 is actuated.

Figure 8 illustrates the native locations pop-up menu according to this embodiment of the invention in further detail. The geographical location data represented by icon 318 is further represented by means of a location window 320 whereby the user can perform functions in relation to the geographical location data itself, and view any data currently associated with the item of geographical information.

The associated data preferably includes at least a name for the location, indicated within window at 322.

Further associated data may be accessed by selecting "associated data" button 324. This further associated data may take the form of, for example, address data, telephone data, number data, etc. All of the associated data initially accessible by the user is contained in the hypermedia contents received from the server when the resources were initially accessed (however, these were originally not presented to the user). On selection of the location representation icon 318, the current locational context is automatically updated, as indicated by context indication box 317. The current locational context is used for performing functions or generating service request messages as described above and further below.

Various functions can be performed via location window 320. One function which may be performed is a "Golocal" function, similar to that described above in relation to Golocal box 316, by means of location window Golocal box 326. A further function which may be performed is a local search, which may be initiated by the input by the user of search criteria such as one or more keywords into text input box 328, followed by the selection of associated submit button 329. This initiates the generation of a service request message containing both the geographic location data associated with the currently selected locational context and the search criteria entered by the user. The service request message is sent to a predetermined server resource, for example the "Golocal.to" server. The locational data and search parameters may be included in the service request message as a URL, automatically constructed by the browser application, in accordance with the URL generation formats described above.

A further function which may be performed via location window 320 is a local services history function, which may be accessed by the selection of local services button 330. Local services button 330 accesses a history list of services which have previously been accessed in the context of the current location.

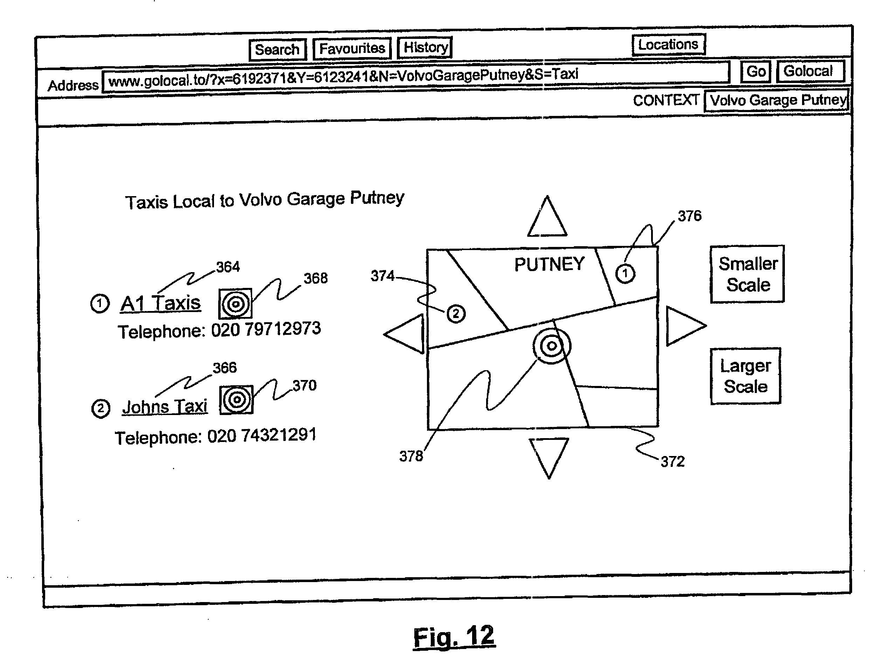

Thus, when a new location is first accessed, local services history list is empty, and actuation of the "local services" button 330 causes the immediate generation of a service request message to be sent to a predetermined network resource providing a location-based service directory service. The current contextual location information is included in the service request message. In return, the terminal receives hypermedia content containing details of local services. Preferably, the content is in the form of hyperlinks to categories of local services (such as "taxis", "hotels", etc) specific to the location indicated in the service request message. These links are preferably in the form of URLs containing both service category codes and the current location in the form of CGI script parameters as described above. Thus, actuation of one of these links causes the generation of a further service request message specific both to the current contextual location and also containing the relevant service category identifier. In response, the service directory server sends a list of suppliers within the service category identified within the service request message and local to the geographical location specified therein. The response preferably includes these individual supplier identifiers in the form of hyperlinks to either supplier-specific contents supplied by the service directory server or the supplier's own web page. An example of a service category-specific page of content is illustrated in Figure 12.

In any case, as the user then navigates through the service-specific responses generated by the service directory server, the selections made by the user are saved by the hypermedia browser application in a history list, and when the same location is accessed in future (for example, if the location is stored in a favourite locations list), the previously-accessed service categories and supplier identifiers are accessible to the user via the local services button 330. Thus, merely by navigating menu options on the user terminal, without the need for generation of service request messages, previously-accessed search directory information, and in particular services which may have previously been used by the user, are immediately accessible to the user for future occasions within the context of a selected location. For example, if a user previously accessed information relating to a particular taxi service firm in the context of a particular location and then used the firm and found the services to be to his liking, the user may wish to re-access the same information conveniently in the future. The user can do this simply by resetting the current locational context to the location in question, clicking local services menu 330, and clicking the user-friendly identifier for the particular local services firm information previously accessed, before any service request message is generated. The actual service request message generated will provide information specific to the selected service supplier. When the local services button 330 is selected, the service category and supplier identification information is preferably presented in the form of a hierarchical list, namely at a top level a service category is indicated and at a lower level the individual supplier identifiers are associated therewith.

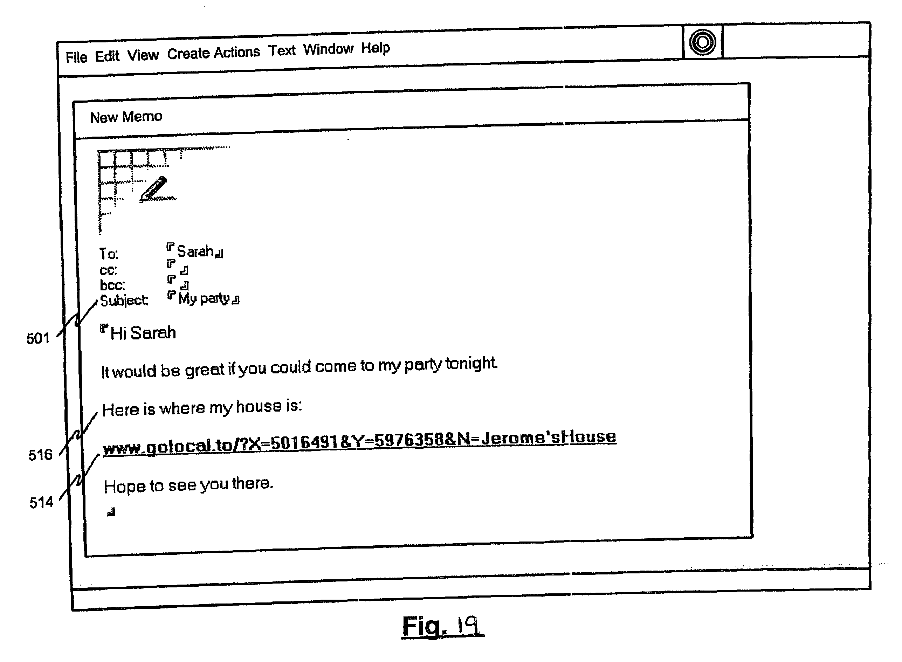

A further function which may be performed through location window 320 is a "send" function 332. Namely, the geographical location data represented by local services window 320 may be sent to another terminal. Information may be sent, for example, by e-mail or by SMS, and the user may be presented with the option of performing the function either once "send" button 332 is actuated, or after a mode of transmission has been preselected. If an e-mail transmission is selected, the user is preferably presented by the user terminal with an e-mail message construction box which contains a representation of the geographical location data, similar to that illustrated in Figure 19. The representation is preferably in the form of a URL containing both the geographical location data and any selected associated data wished to be transmitted by the user, such as:
*www.golocal.to*/*?X=6192371 &Y=61233241 &N=VolvoGaragePutney*

Since the geographical location data is included in the message in the form of a URL also containing the identifier of a network resource (www.golocal.to) capable of recognising the geographical location data in the format given and generating an appropriate location-based response such as one including a map with the given location indicated and named, the geographical location data is reverse-compatible. Namely, if the user terminal receiving the e-mail is "location-smart", the user terminals e-mail application may automatically recognise the location data within the URL, and allow the manipulation of the data automatically by the user, for example by the automatic presentation of a pop-up locations menu similar to that illustrated in Figure 8 on selection of the URL. On the other hand, if the user terminal is not "location-smart", the user may nevertheless access the geographical location data by clicking on the URL (if the e-mail application is HTML-enabled), or by cutting and pasting the URL into the address entry box of a hypermedia browser on the user terminal and clicking "GO", such that a service request message containing all of the geographic location data and associated data is transmitted in a service request message to a location-based network resource (which is also indicated in the URL itself), such as the "Golocal.to" server, which is able to provide the non-"location-smart" with any required information local to the indicated location.

In the above, the URL itself includes the geographical parameters, however this is not necessary. In an alternative embodiment, a hyperlink, containing the network resource identifier www.golocal.to, and the geographical location data are included as separate parts of the message in an associated manner. The geographical location data may for example be included in the form of a code such as the Placecode™ format described above, along with instructions for the user to type in the code once the network resource is accessed. On the entry Web page of golocal.to, an entry box is then provided for the input of the geographical location data by the user manually. In the above, the URL format containing the location data provides backwards compatibility, in that recipient terminals do not need to recognise the parameters accompanying the network resource identifier as geographical parameters; this is performed at the network resource end. Alternatively, the geographical location data may be included without a network resource identifier, but in a predetermined geographical data format, such as those described above, for recognition by a "location-smart" terminal. The data may for example be included in the message header or, for example as an XML file, in the message body.

If the geographical location data is to be sent via SMS, the user terminal preferably automatically presents to the user the user's phonebook containing mobile telephone directory numbers for SMS-enabled user terminals. On selection of the recipient via the user, the user terminal generates an SMS message containing auto-generated text providing the geographical location data and preferably, at least the user-friendly name allotted to the location. Again, the geographical location data itself is preferably sent in the form of a URL, or at least a portion thereof, such that, again, the geographic location data is reverse-compatible. If the receiving terminal is "location-smart", the receiving terminal can automatically recognise the location data within the SMS (since it is provided in a predetermined format, for example being the "Golocal.to" URL format), and to provide the receiving user one or more location-specific options (such as "save location") automatically. On the other hand, if the receiving terminal is not "location-smart", the user can either cut and paste or manually re-type the URL contained therein, into the address entry box of a hypermedia browser and retrieve hypermedia contents specific to the location specified in the received SMS message.

It is to be mentioned that user-selection of the associated data button 324 in the location window 320 not only allows existing associated data to be viewed by the user, but also allows the user, by means of suitable menu options, to associate further data, either by means such as a text-entry box or by associating further information currently stored on the user terminal (for example, photographs, video files, etc) with the location data via storage in the location storage records.

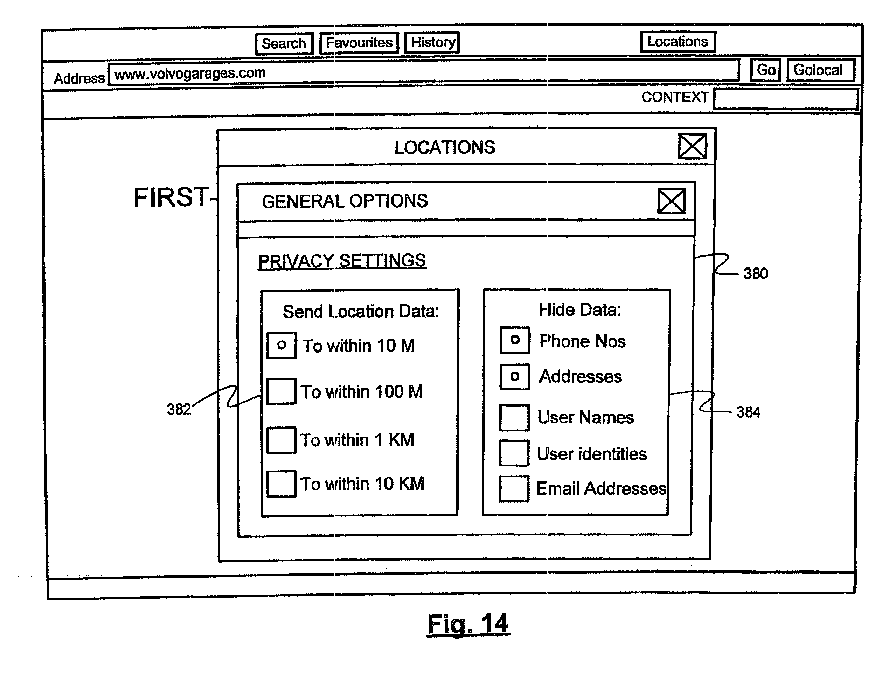

An "options" button 334 appearing in location window 320 allows various options specific to the current contextual location to be set within the user terminal, for example, a "privacy" option may be set via a menu interaction. Figure 14 below illustrates various privacy settings which in a "general options" menu which are to be applied as minimum privacy settings, for location data held within user terminal. Similarly, location-specific privacy settings corresponding to those illustrated may also be set, via options selection box 334, on a per-location basis.

Finally, in location 320, a selection box 336 is provided allowing the current contextual location to be added to the favourite locations list of the user stored on the user terminal. The box 336 is preferably in the form of a radio button, which indicates whether a displayed location is currently a member of the favourite locations list.

Locations pop-up menu 319 also includes various menu options which are not specific to the current contextual location. If the current contextual location is not the current location, a current location selection box 338 is provided, whereby data and menu options relating to the current location of the user terminal may be selected to be placed within location window 320, and to set the current locational context to the current location. New location selection button 340 provides functionality allowing a user to specify an entirely new location to the user terminal, either by local location selection procedures or location selection procedures carried out with the help of a remote server. These location selection procedures, presented to the user on selection of new location selection box 340, may be similar to that described above in relation to Figures 4 and 5.

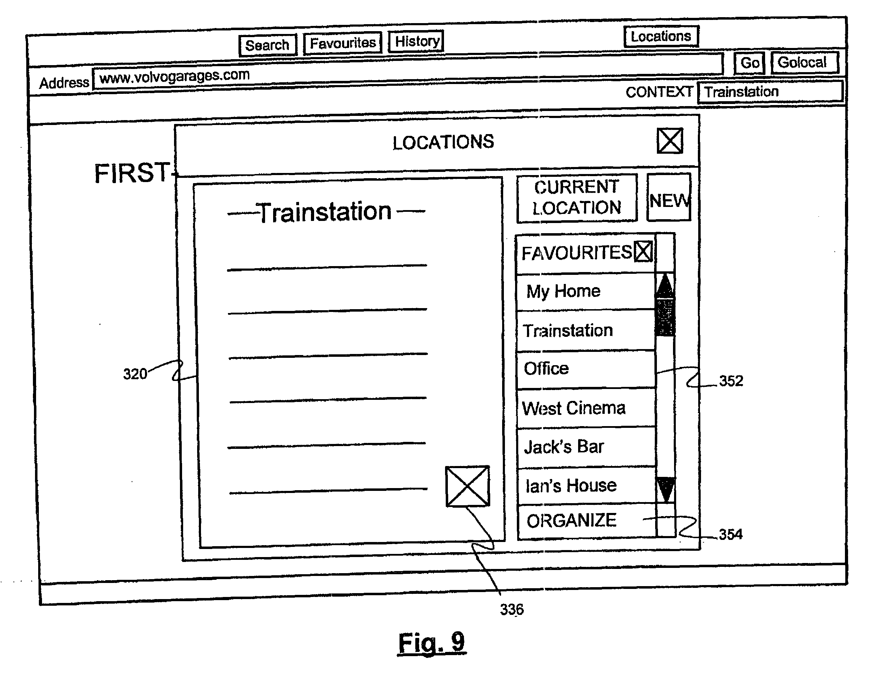

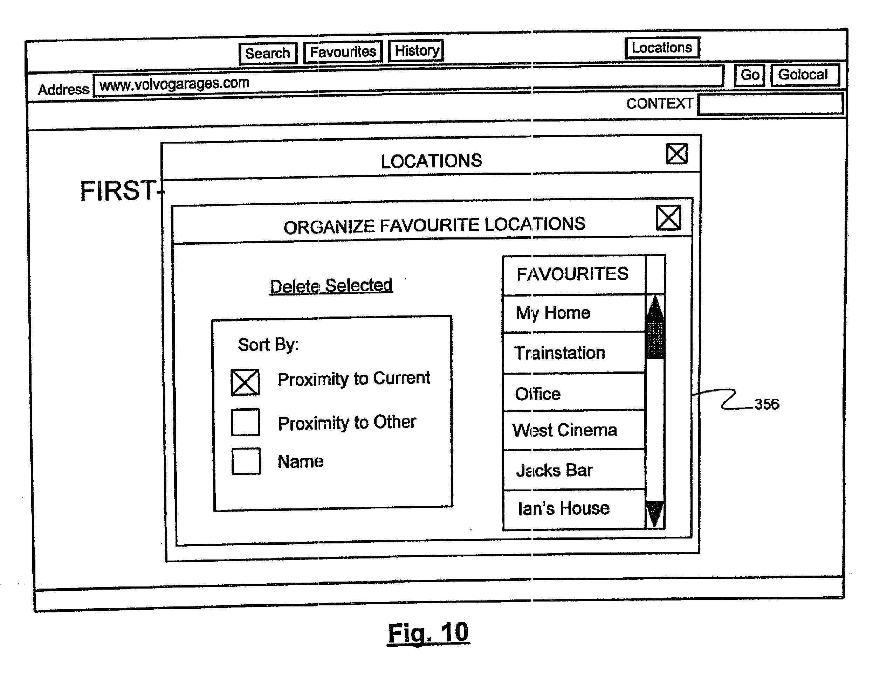

Favourite locations selection button 342 causes the browser application to display a list of favourite locations, as illustrated in Figure 9, favourite locations menu 352 includes a list of user-friendly names for previously-stored locations. The list of locations is preferably ordered in accordance with proximity to the current location of the user terminal. Thus, in the example illustrated in Figure 9, the user is most proximate to the location "my home", and the remaining favourite locations are ordered according to proximity. By means of this functionality, access to favourite locations becomes easier for favourite locations which are close to the user's current location, which will in general be the ones which the user is more interested in setting as a current locational context (although of course the user may be interested in a location completely remote from his locational context, which is also accessible via favourites list menu 352). The user can select any of the locations indicated in favourites list, by clicking on the listed name, as the current contextual location, causing the contextual indication box 317 to be updated, and causing data associated with the location and menu options specific to the location to be presented in location window 320. Location windows are preferably formatted in the same manner as that indicated in Figure 8, except radio button 336 is checked. Favourite locations menu 352 also includes an "organize" menu option 354, whereby the user is presented with an "organise favourite locations" menu option as illustrated in Figure 10. This organisation menu allows a sorting selection of the favourite locations list to be set. For example, the favourite locations list may, in addition to sorting by proximity to the current location, be sorted by proximity to another selected stored location (for example a home location), or sorting by name. Items may also be deleted from the favourites list via organise favourites locations menu 356.

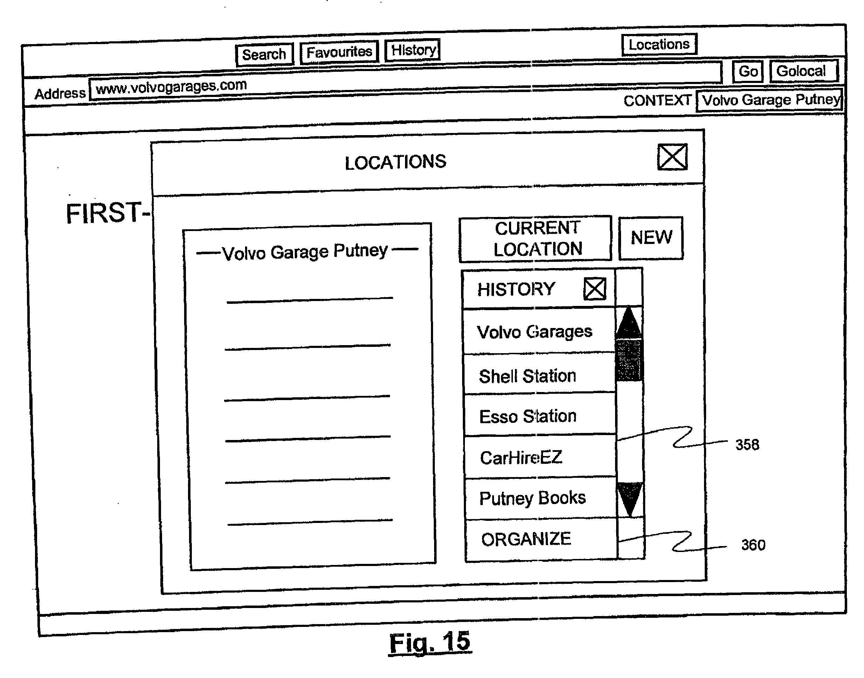

Referring again to Figure 8, a further general menu option provided in pop-up location menu 319 is a location history selection button 344, whereby a history list menu 358 as illustrated in Figure 15 is accessed. Location history list 358 functions in a similar manner to favourite locations list 352, and also includes an organize option 360, which provides a "organize location history" menu similar to "organize favourite locations" menu 356 described above. Location history list 358 includes a list of all recently-accessed items of locational content, identified by a user-friendly name associated with the locations in question.

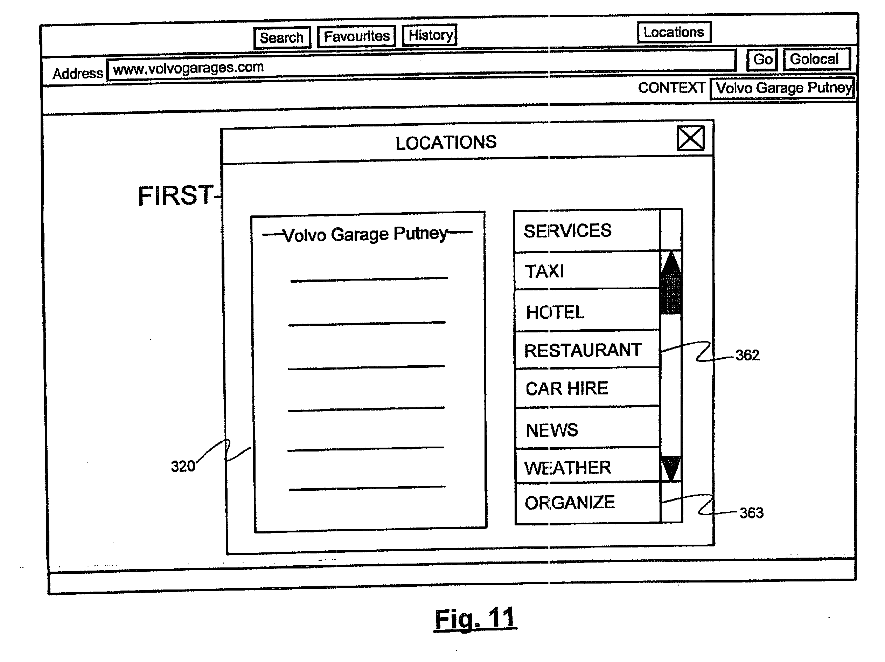

Referring again to Figure 8, favourite services selection button 346, on actuation, provides a favourite services list 362, as illustrated in Figure 11. The list consists of a set of service category names of services which may be pre-set in the terminal application, or added to by the user. The list of favourite services is stored in a data store of the user terminal. On selecting a favourite service from the list, by clicking on the service name, a service request message is generated by the browser application containing a service code for the selected service and geographical location data relating to the current contextual location. Thus, for example, if a "taxi" service is selected from the favourite services list 362, whilst "Volvo Garage Putney" is selected as the current locational context (indicated in location window 320) a service request message containing the following URL is automatically generated by the user terminal:
*www.golocal.to*/*?X=6192371 &Y=6123241 &N=VolvoGaragePutney&S=Taxi*

An exemplary location-based response generated by the "golocal.to" server is illustrated in Figure 12, containing links 364, 366 to resources specific to suppliers indicated within the location service directory as being local to the indicated geographical location in the service request message. Additional data, such as a telephone number, may accompany the links 364, 366. Of course, the suppliers may not have Web or WAP sites and the location-based response may simply provide contact details for the suppliers. In addition, geographical location data, as described in relation to Figure 7, may also embedded in the hypermedia resources and represented by the characteristic icons 368, 370. These icons, when clicked upon, actuate within the browser application the generation of location service menu 319, with a location window 320 containing geographical location data specific to each of the suppliers indicated in the hypermedia resources. Since the service request message also includes the current contextual location, the location-based server is capable of generating a map 372 containing indications 374, 376 of the geographical locations of each supplier and further containing an indicator 378 of the current contextual location. The hypermedia resources also include resources for changing the scale of the map, or panning the view in of four directions away from the initial map, which is preferably centred upon the current contextual location.

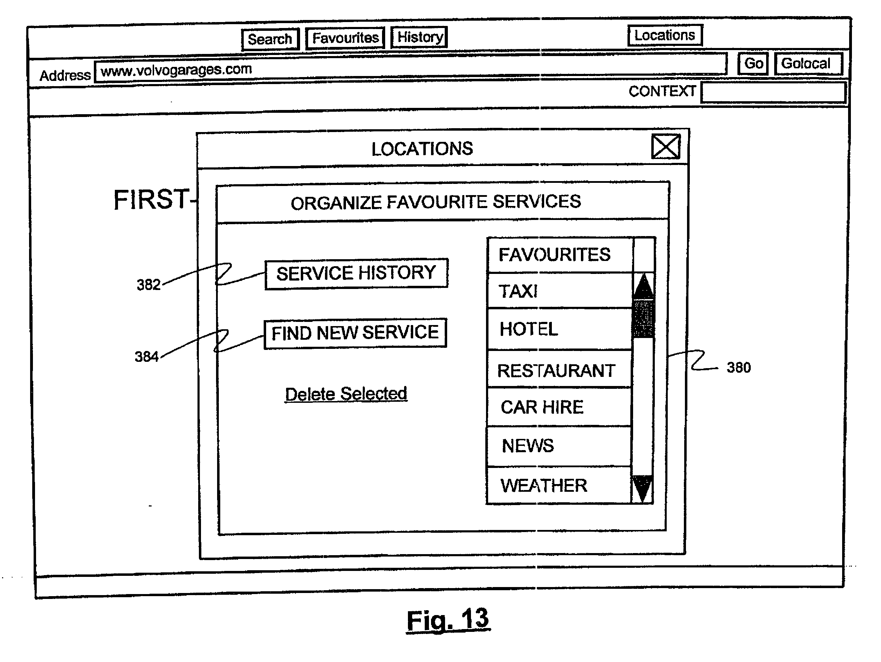

Favourite services menu 362 also includes an organised services menu option 363, whereby an "organize favourite services" menu window is generated on the user interface, as illustrated in Figure 13. This menu 380 includes a "service history" selection button 382, which when actuated presents a list of recently-accessed services, along with the locational context in which those services were accessed, for selection by a user to allow the user to place any new services identified therein within the favourite services list. The user can then access services which have been found in a certain contextual location to be readily accessed in other location contexts, by means of the favourite services list. In addition, menu 380 includes a "find new service" selection button 384, which allows entirely new services to be found by the generation of a service request message, containing an indication that entirely new services are being searched for, which is then transmitted to a predetermined location-based contents server, such as the "golocal.to" server described above.

Referring again to Figure 8, pop-up menu 319 comprises a "register a location" selection button 348, whereby the user is able to generate a service request message containing the current contextual location and an indicator that the current contextual location is a location in which the user wishes to register by means of a process to be described below. The generated service request message contains the following type of URL:
*www.golocal.tol?X=5371291&Y=1234796&SF=register*

Thus, it is by means of a server function code that the intention of the user to register a particular location is indicated to the server. The request may be handled by a location-based contents server such as contents server 30 or 32 illustrated in Figure 1, or may be handled by an entirely separate server, identified by a different domain name, like the location registration server 50 illustrated in Figure 1. In the alternative, one or more location name "resellers" could be appointed, whereby location names may be registered at any of a number of servers connected to the Internet, on behalf of location registration server 50.

Referring again to Figure 8, locations menu 319 also includes a "general options" selection button 350, whereby various options relating to locational data generally may be set. One example of such an option is illustrated in Figure 14, namely a "privacy settings" options menu 380.

The privacy settings option menu 380 allows a user to set a maximum accuracy with which location data is specified in service request messages sent from the user terminal. By setting a higher accuracy, the user is able to obtain location-based services which are more specific to his location, and therefore potentially of more use to the user. However, at the same time, the location data which is sent also more accurately identifies the user's location, which some users may not be comfortable with for various reasons. Therefore, the privacy settings menu preferably includes an accuracy option list with different accuracy settings. For example, in the example shown in Figure 14, the accuracy settings include four possibilities, namely to within 10 metre accuracy, to within 100 metre accuracy, to within 1 kilometre accuracy, and to within 10 kilometres accuracy. Even with a relatively coarse accuracy setting (to within 10 kilometres) many location-based services (such as weather services, news services, etc) can be usefully provided, without giving away a great deal of information about the exact location of the user. On the other hand, with a finer accuracy setting, for example to within 10 metres, the user's location on a map, and other services which are more location-specific can be provided by a location-based content server.

In the above, a preferred modified decimal format, a Placecode format, for location data is described. In this, and other (alpha)numerical modes of representing locations, the different accuracy settings may be implemented by the browser restricting each coordinate to a maximum number of characters, the number being incremented (e.g. by one) for each more accurate privacy setting.

In addition to the accuracy settings menu 382, the options menu box also includes general privacy settings for associated data. Namely, settings box 384 allows a user to specify which data, from all items of associated data, which the user does not wish to be automatically included in any service request messages. For example, the user may wish to hide phone number data and address data, and other personal identifiers. On the other hand, they may be happy for their username, location type, etc to be automatically included in any service request message. Again, by including more associated data, the user is able to obtain potentially more useful data. As mentioned above, similar privacy settings may be set on a per-location basis. Additionally, privacy may be set on a per-service basis, allowing privacy settings to be set for each service (preferably using a settable overridable default settings set for all services). Such settings also preferably specify a maximum accuracy to which location data is provided depending on the level of trust given to the service, or a level of accuracy appropriate to the service.

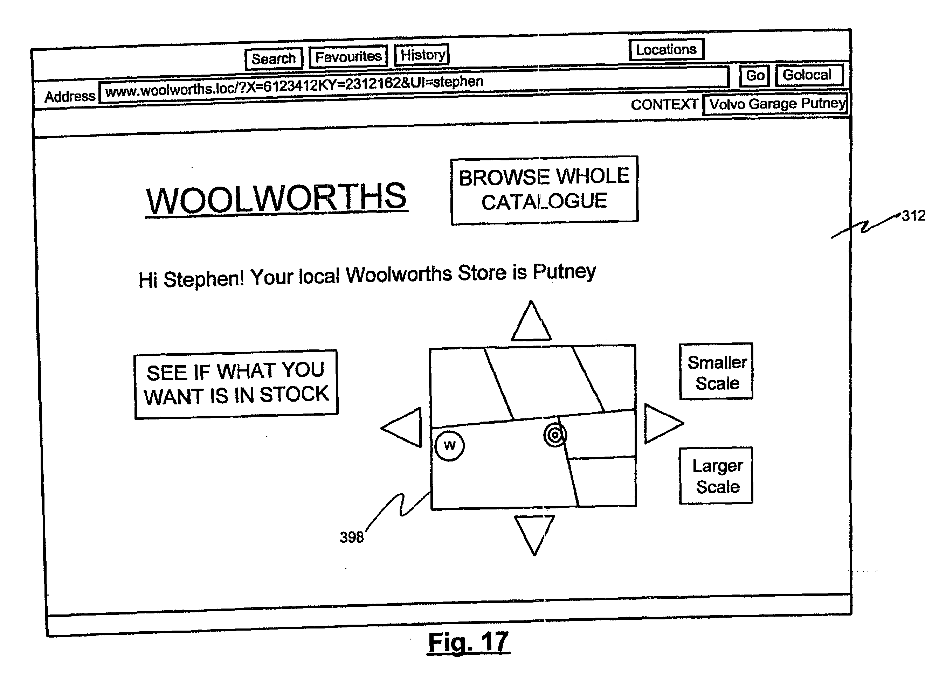

In the above, the performance of various functions, and the setting of various characteristics in relation to various functions, for contextual location data is achieved via interaction with a pop-up location menu box 319. Figures 16 and 17 illustrate further manners in which functions and characteristics of functions may be set via the user interface in relation to geographical data stored by or received by a "location-smart" hypermedia browser application. As mentioned above, the retrieval of information local to a location from a location-based server may be achieved merely by menu button 316. Figure 16 illustrates the response received from a location server when the "golocal" button is actuated.

As illustrated in Figure 16, the response received from the location-based server preferably includes service directory links, consisting of URLs containing the current location data and a service code specific to each of the indicated service categories. By clicking on one of the service codes, the user accesses a directory of services in the current location. The response may also include links to individual directory listings for suppliers, as indicated at 391, containing hyperlinks either to supplier content pages or directory listing content pages specific to the suppliers which are present in the locality of the contextual locations. Furthermore, the response may include a location-specific map portion 394 centred on an indication of the current contextual location 396. The response further includes a local search option, provided by form text entry box 392, whereby keywords may be entered by a user. On clicking the associated submit button 394, a service request message is sent to an appropriate location-based server containing the keywords and the current contextual location data.

Figure 17 illustrates a further user interface showing the result of a "location-smart" hypermedia browser application accessing a location-enabled server. As discussed above, the identification of the location-enabled server may be carried out by storing individual server, or resource, identifiers, such as domain names, in the terminal location, such as the case for the "golocal.to" service. Alternatively, the indication may take the form of a top level domain name such as a ".loc" part of the network resource identifier. In the example shown in Figure 17, the network resource accessed is identified by *www.woolworths.loc,* the ".loc" part of the identifier indicating that the resource is location-enabled. The "smart-terminal" recognises the resource as location-enabled, either when the resource identifier is manually typed into address entry box 302, or when a hyperlink is selected within hypermedia content window 312 containing the network resource identifier, and in response (preferably without user interaction, but possibly with one or more intervening user interactions) generates a service request message containing not only the network resource identifier but also data indicating the geographical location of the current contextual location, along with any suitable associated data stored in the user terminal. In the example shown in Figure 17, the terminal application has included this data in the URL of the network resource, to generate the following URL:
*www.woolworihs.locl?X=6123412&Y=312162&UI=stephen*

The additional data included in this case is a user identifier, such that the location-enabled resource may generate location-specific data which is also personalised with the user name of the user. An example of a personalised and location-specific response is illustrated in hypermedia content window 312. The content includes a location-specific map 398, which may indicate the current contextual location in relation to resources associated with the network resource, for example in this case a Woolworths store. This automatic inclusion of geographical location data, and associated data, provides a useful automatic personalisation mechanism where network resources are identified which are known to allow such personalisation. The network resource identifier is used to determine whether or not the additional data is included in a service request message, not only because this ensures that only location-enabled websites are provided with the information, but also because this ensures a degree of user privacy. Namely, if the user is able to identify characteristics of network resources to which his contextual location will be automatically identified, user privacy is maintained. Namely, users can select whether or not to transmit personal data such as personal location data.

One "location smart" user terminal may generate a query for another "location smart" user terminal. Through interaction with user interfaces presented by the terminal application, a user may specify a query to be sent to a selected other user terminal. For example, the user may specify that he or she requires the next destination of the recipient user, and an email may be automatically generated by the user terminal application containing a hyperlink containing a query similar to the examples given above together with the return e-mail address of the sending user. The hyperlink URL generated may be of the form:
*"geo:llquery={location type=destinationl}&return address=mailto:abbey@hotmail.com?subi ect=Here is my destination&body=<<query>>"*

The hyperlink may be embedded in text warning the user that a location will be sent if the link is activated so that informed consent may be given by the recipient since, unlike with the content server examples above, the recipient has not originated the interaction and therefore cannot be assumed to have consented. On activation of this hyperlink, the recipient user terminal passes the query to the user terminal application associated with the protocol prefix "geo:" and the home location of the user selected and substituted for "«query»" in the return address. An email for abbey@hotmail.com (the sender's email address) is automatically generated using the "mailto:" protocol header and includes "Here is my home location" as a subject header and the selected location ad associated data as a part of the body of the e-mail. The recipient user may then add further text to the email and send it in a conventional manner.

Again, it is to be understood that the specified return e-mail address need not be that of the sender of the query request, but any other user. Other protocol header may be also used so that the return communication may be sent in other communication modes. For example, a user of a mobile phone may send an email query to a user of a PC providing his or her telephone directory number (MSISDN) as a return address for sending an SMS message. The hyperlink URL may look like this:
*"geo:llquery={location type=departure point}&return address=SMSto:0777577775?body=H ere is my departure point* <<query>>"

Thus, it can be seen that "location smart" user terminals may query other "location smart" user terminals in a similar manner to content servers querying "location smart" user terminals as described above. More generally, any data processing device capable of communicating over a communications channel with a "location smart" user terminal may query the locations stored therein. Any communication mode may be used for the sending of the query and for the reply which may use a different communication mode. Such communications channels may use any transfer modes/protocols such as those described above. Thus "location smart" user terminals may be queried over SMS, MMS, email, and other messaging systems, HTTP, WAP, in call using DTMF or voice and so on.

In further embodiments of the present invention, functions or commands specified by other data processing applications, such as content servers or other user terminals, may be performed by a network-side or terminal-side location application. While it has been described above how on receipt of an item of location data, for example in a Web page, e-mail or SMS, the user of a "location smart" user terminal may instruct the location application to add the location and any associated data to his or her favourites list, more varied tasks may be performed by the location application on the basis of commands or instructions contained in data associated with one or more items of location data. For example, a hyperlink on a Web page may contain a command to add two locations to the user's favourite locations list and identify those locations as a first and a second destination associated with specified date/times, thus forming an itinerary. The hyperlink URL may be of the following form:
*"geo:*//*command={add location={N=Heathrow&X=123456&Y=9876543&H=53&HE=10&L T=airport&D=1*/*7*/*2000&T=09:30&set as destination1}}&command={add location={N=Helsinki V antaa&X=1543.432&Y=543.4323&H=54&HE=143&LT=airport&D=1*/*7*/*2000&T=12:15&set as des tination2}}"*

Other commands may be specified using defined command types for performing any of the following functions: adding one or more items of location and associated data (including associated files as described above such as a photographic image or video file; a map file; an audio file; a text file; a diary or calendar event; a hypermedia file; an e-mail file; a program file; a contacts record, such as a vCard), amending one or more items of location or associated data, deleting locations, setting existing locations as certain well-known types (such as departure point, destination, home, office, car, restaurant, airport, tourist attraction, etc as above); sending locations to specified or user selected addresses, generating a service request message in respect of one or more items of location or associated data and so on. Generally, any function that may be selected through user interaction with user interfaces presented by a terminal-side location application may equally be specified in a hyperlink so that the function may be performed by the user merely activating the link. Using specified commands can be seen as a more general case of the examples given above of adding a single location to the user's favourite list and of querying the locations application and data store to generate a service request message for sending back to a content server. In general, commands may be performed in respect of one or more items of location and associated data stored in a user' locations data store or items of location data provided along with the command. Specification of one or more stored location data items upon which to perform a function may occur using a query language as has been described above. Furthermore, commands may be combined to instruct the location application to perform multiple tasks. For example, a hyperlink contained in a Web page may contain a command to enter the two destinations in the user's favourite locations list as described above and also to generate a service request message for ordering a taxi to collect the user from his current location as described above. The hyperlink may be of the following form:
*"geo:llcommand={add location={N=Heathrow&X=123456&Y=9876543&H=53&HE=10&L T=airport&D=1*/*7*/*2000&T=09:30&set as destination1}}&command={add location={N=Helsinki V antaa&X=1543.432&Y=543.4323&H=54&HE=143&LT=airport&D=1*/*7*/*2000&T=12:15&set as des tination2}}&query={current location&location format=standardlatlong&no associated data}&return address=http.llwww.airportcabs.co. ukl?destination={N=Heathrow&X=123456&Y=987654&LT=airp ort&D=1*/*7*/*2000&T=09:30}pick up=<<query>>"*

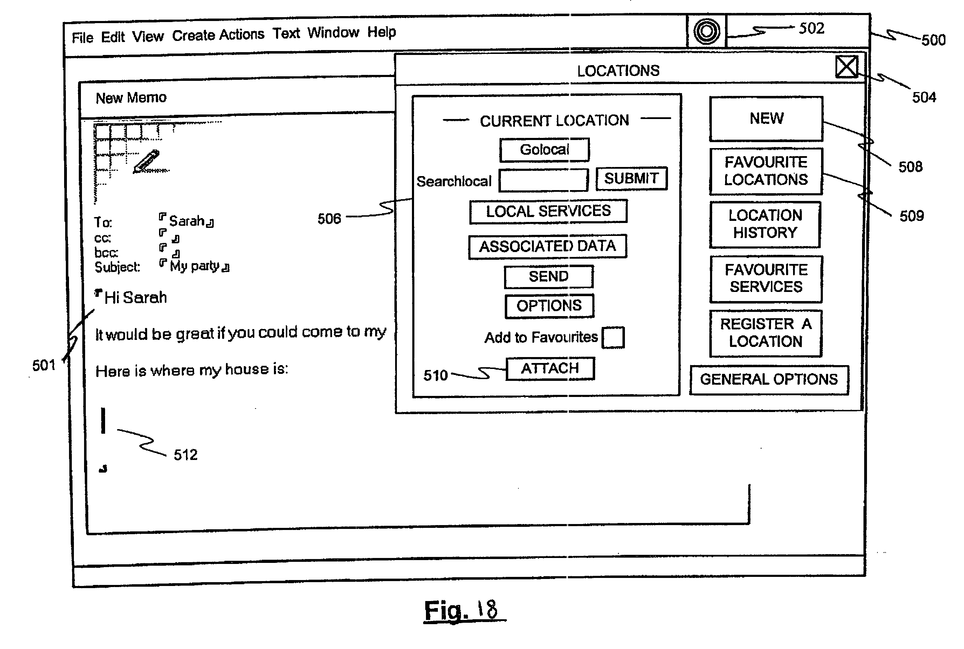

Figure 18 illustrates a graphical user interface 500 provided by a terminal e-mail application 72 in accordance with the present invention. The graphical user interface illustrated is a graphical user interface for constructing and editing a new e-mail message 501. In addition to the usual menu options provided in an e-mail application, a locations button 502 is provided which, when selected during the editing process, for example after some natural-language text has already been created by the user in the message, causes a locations menu 504, similar to the locations menu described above in relation to Figure 8, to appear on the graphical user interface. A current contextual location, which is by default the current location of the user terminal, is indicated, along with any associated data, in location window 506. Location window 506 contains similar functionality to location window 320 described above. In addition, there is an "attach" selection button 510 provided for inserting data corresponding to the current contextual location to the e-mail message. The current contextual location may be altered via favourite locations access via favourite location button 508, or location history list access via location history button 509. Thus, various locations previously captured in the user terminal may be inserted in an e-mail message, along with any associated data designed to be included by the user. On selection of the attach function via attach button 510, geographical location data is inserted in the e-mail message at the location of the text cursor 512, as illustrated in Figure 19. The preferred format of location data is in the form of a URL hyperlink 514 which is marked up within the body 516 of the e-mail message, as illustrated in Figure 19. The data may be, alternatively or in addition, inserted in other forms, as described above, such as in the form of programming script to be parsed by the receiving application, as header data in the message or as an attached file. Although shown in full in Figure 19, the inserted data may be displayed with a user-friendly tag, for example the user-allotted location name highlighted as a hyperlink, with the additional parameter data embedded in the message as non-displayed mark-up. An icon may be added to indicate the presence of location data in the message. In the case of the current contextual location selected to be attached being the current location of the user terminal (which is as yet not named), an option is first automatically given to the user to add associated data in the form of at least a user-allotted name. In the example given, the user-allotted name is "JeromesHouse". Once the location data is inserted, the user may return to the text editing function to continue creating natural-language text using the word processing function of the email editor.

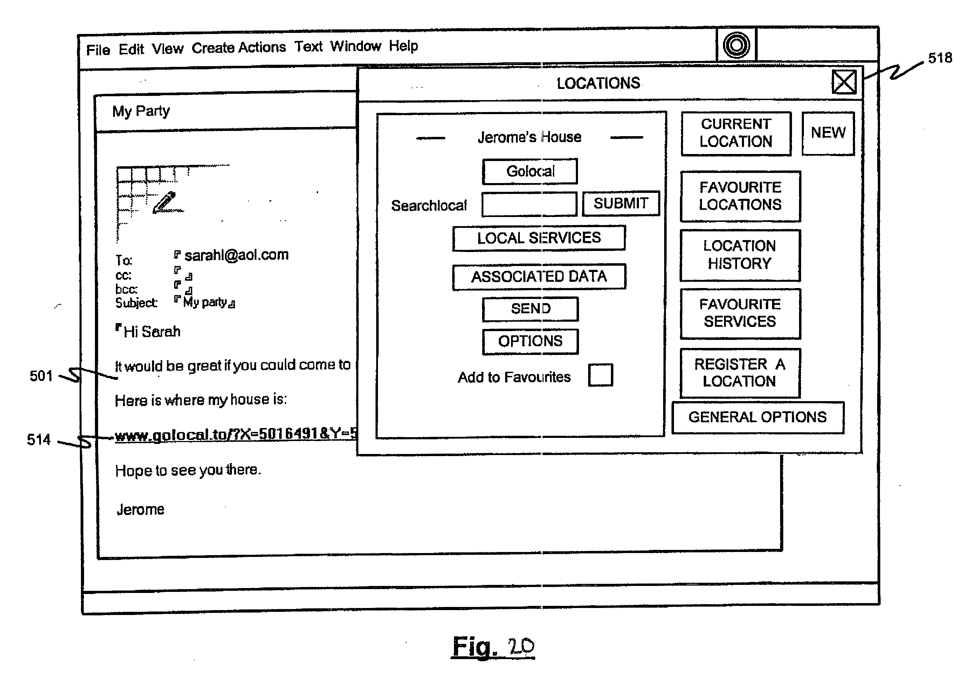

On the receiving side, if the user terminal is "location-smart" as shown in Figure 20, when the receiver selects the geographical location data, the e-mail application generates a pop-up locations menu 518, similarly to that previously described, allowing the geographical location data to be manipulated and used in various manners previously described. Namely, the location data may be saved to a favourite locations list, sent to further user terminals, and/or used to generate service request messages, sent by the terminal's browser application to a selected network resource to find information specific to the location itself. Notably, in the case of non-"location-smart" user terminals, the user can still readily access location-specific information by actuating the hyperlink, since the geographic information is presented in the form of a network resource identifier for a network resource which is location-enabled and includes the location data itself.

If, on the receiving side, the user terminal is not "location-smart", the recipient may actuate the hyperlink 514, which initiates the transmission of a service request message to the location-enabled network resource indicated in the URL, and containing the geographic location parameters also included in the URL, so that the user may access content generated in relation to the indicated location.

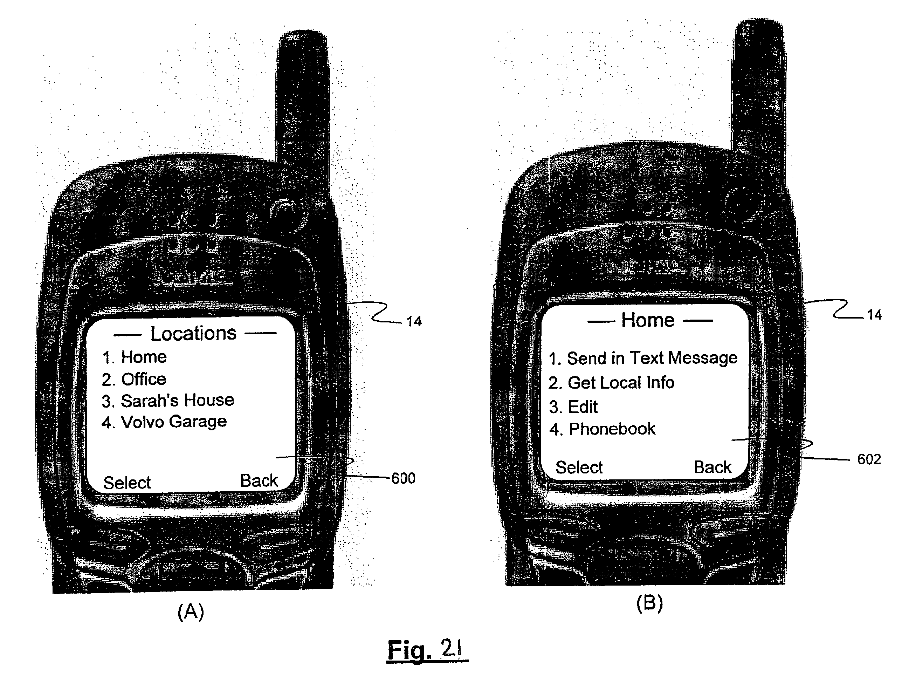

Figures 21 to 25 illustrate a further embodiment of the invention, in which the user interface is one of a WAP-enabled cellular mobile radio station, the example given being that of the mobile terminal 14 which is able, via network interactions, to obtain positioning data for its own location. In addition to currently-known main native menu options, such as "phonebook", "settings", "messages", etc, the terminal has a main native menu option entitled "locations", illustrated in Figure 21(A). Locations menu includes a list of user-allotted names for locations stored in location records in the mobile terminal, preferably ordered by proximity to the current location of the mobile terminal. The user may navigate through the stored locations by keypad interactions, and select one of the locations from the list, in this case the location called "home". On selection of a location from the location list menu 600, a native menu in the form of location function menu 602 is presented to the user, allowing the user to select one or more functions to be applied in relation to the selected location. One function is to send the location in a text message, which if selected presents the user with a list of possible text message recipients, from which the user may choose. On selecting a recipient, the terminal automatically generates the text of the text message, or otherwise includes the geographical location in the message (for example, in header fields if appropriate). As in the case of the e-mail application shown above, the location data may be added to the message during the input and editing of natural-language text by the user, to which function the user may return after the insertion of a location item in the text. Furthermore, although illustrated as a textual item on the display, the inserted location may be indicated in a more user-friendly manner, with the location represented as a highlighted form of the user-allotted name and/or a selected icon representing the presence of usable location data. The location data parameters may be included in the message as non-displayed data, for example as a resource associated with the displayed location representation by mark-up or in the message header data or as an attached file.

In the above descriptions of the "sending" function in an e-mail and an SMS application, the URL itself includes the geographical parameters, however this is not necessary. In an alternative embodiment, a hyperlink, containing the network resource identifier www.golocal.to, and the geographical location data are included as separate parts of the message in an associated manner. The geographical location data may for example be included in the form of a code such as the Placecode™ format described above, along with instructions for the user to type in the code once the network resource is accessed. On the entry Web page of golocal.to, an entry box is then provided for the input of the geographical location data by the user manually. In the above, the URL format containing the location data provides backwards compatibility, in that recipient terminals do not need to recognise the parameters accompanying the network resource identifier as geographical parameters; this is performed at the network resource end. Alternatively, the geographical location data may be included without a network resource identifier, but in a predetermined geographical data format, such as those described above, for recognition by a "location-smart" terminal. The data may for example be included in the message header or, for example as an XML file, in the message body.

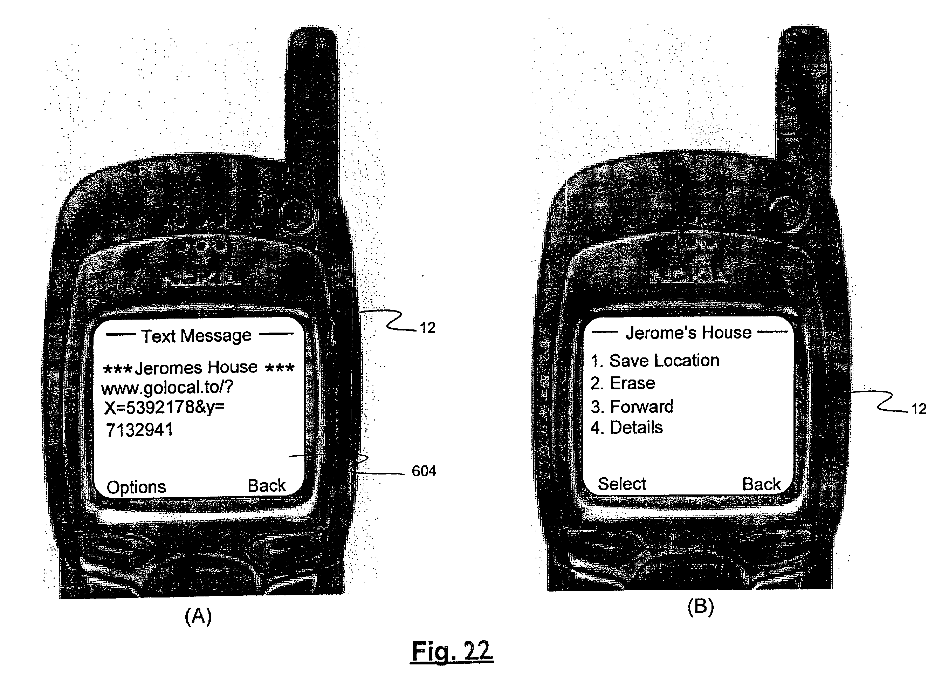

Figure 22 illustrates the receipt of the generated text message at a different mobile terminal, for example mobile terminal 12. The location-related contents of the text message 604 are illustrated in Figure 22(A). As shown, the text message preferably includes marked-up additional data, preferably including at least user-allotted name "JeromesHouse", within a specified mark-up format, and a URL containing a network resource identifier for a location-enabled network resource (in this case "golocal.to"), along with the location data. The user can actuate the hyperlink, or even type it in to a browser application, and receive location-specific data relating to the indicated location. Furthermore, if the receiving terminal is "location-smart", as in the case of terminal 12, a further menu option is provided in the form of a location-specific menu option as shown in Figure 22(B), including for example "save location", which enables the received location to be saved direct to the mobile terminal's location storage directory, and then to perform the other location-related functions provided on the terminal.

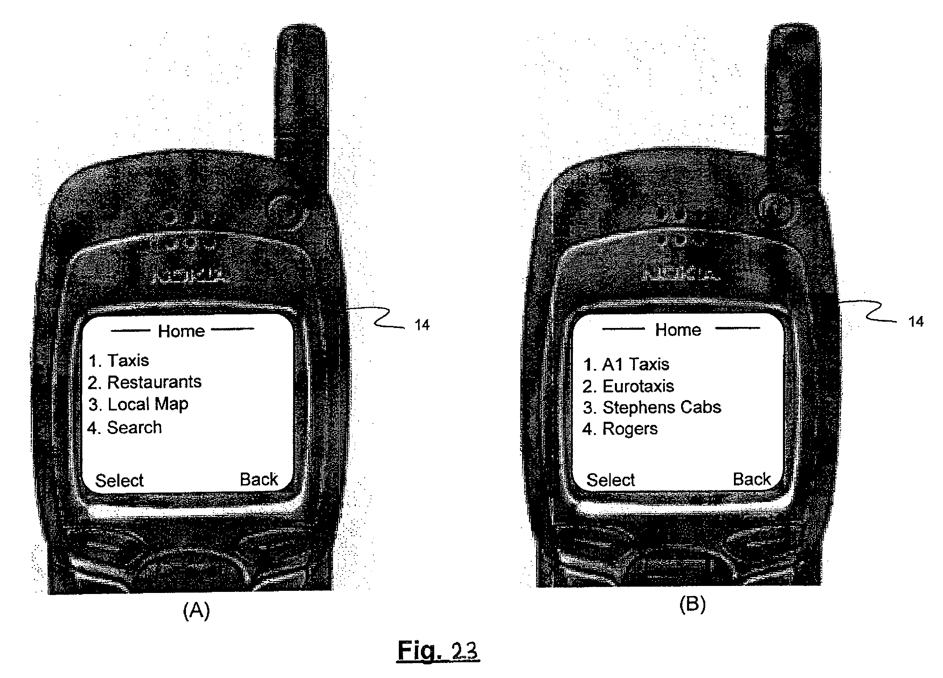

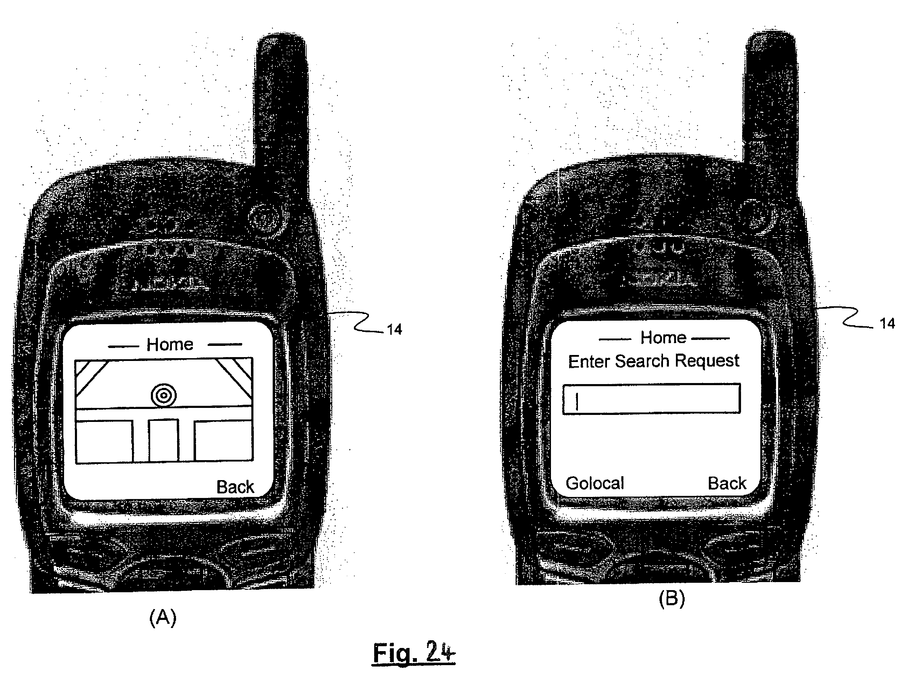

Referring again to Figure 21(B), another option provided in relation to an item of locational data is an option to select a "Get Local Info" function. On selection of this function, the user terminal offers a further native menu option in the form of a service menu, relating to informational services which may be obtained in the context of the current location. On selection of at least some of these service options, the user terminal generates a service request message to request information local to the selected location. The service request message contains the geographical location data as text, a service code identifying the requested service and possibly further functional data, for example the user-allotted location name. The service request message may be an SMS request message in a format similar to that illustrated in Figure 22(A). The service request message is addressed to an SMS service entity, which provides local information by return SMS. Preferably, however, the service request message generated is a hypermedia browser request message, such as WAP Transfer Protocol (WTP) Get message, containing the location data, addressed to a WAP- and location-enabled server. For example, if a "taxi" informational service is requested, the server may provide a list of local taxi names and associated telephone number data, as exemplified in Fig. 23(B). If a "local map" informational service is requested, the server may provide a response similar to that illustrated in Fig. 24(A), namely one containing a local map. A further native menu option provided via location menu 602 is a "local search" option. On selection of this option, the response received is a local search form, similar to that shown in Fig. 24(B) (however, preferably, the search function is provided in a native text entry box, also as illustrated in Figure 24(B), for entering one or more search parameters. The selection of "Golocal" option then causes the generation of a service request message, a WTP Get request, containing the locational data and the search parameters, addressed to a local search engine, which provides an appropriate location-based search response.

A further embodiment of a native menu option, accessed through location options menu 602 illustrated in Figure 21(B), namely an edit option, whereby associated data, either already present on mobile terminal, or to be added by the user via user interface interactions, may be added to the location record as associated data. The same applies for example to native "phonebook" option, whereby phone number data pertinent to the location, which may be either received with the locational data or associated with it by reference to the main phonebook of the terminal, may be accessed specifically in the context of the current location.

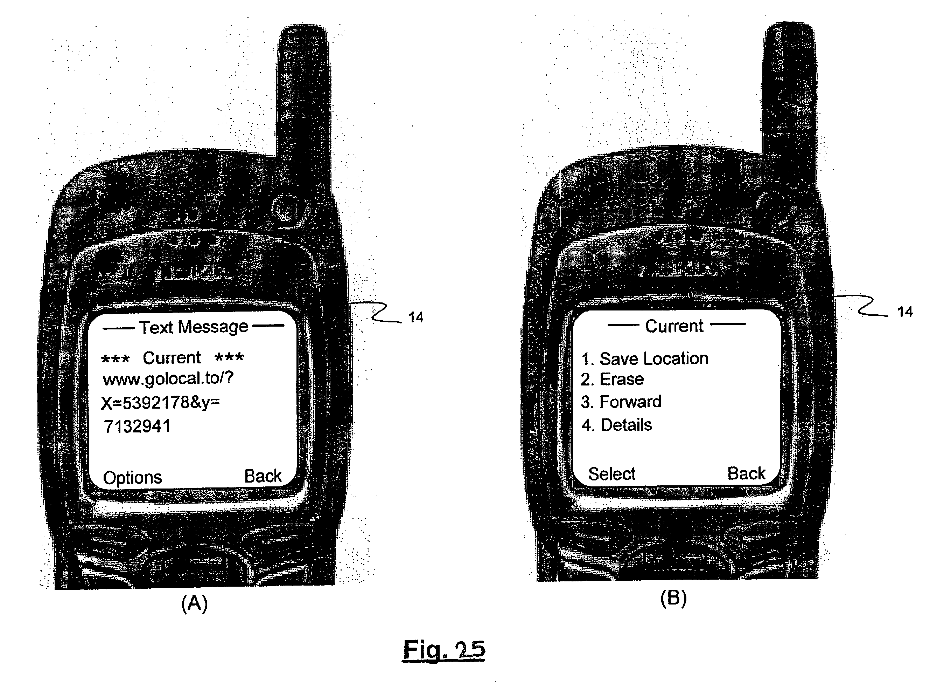

Figure 25 provides an illustration of an embodiment of the invention, showing a possible form of response with which a "location-smart" mobile terminal 12 may receive its current location from an SMS positioning entity as described above. Namely, the locational data may be received in substantially the same format (Fig. 25(A)) as the data received from another user terminal (Fig. 22(A)), and similar functions, including a "save" option may be provided in response to receipt of the data (Fig. 25 (B).

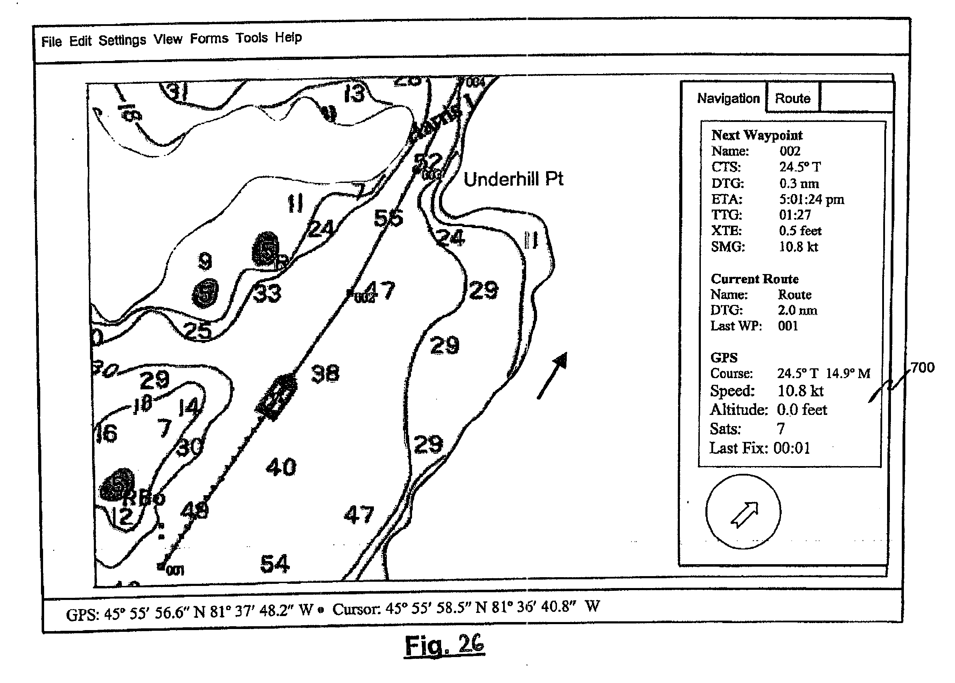

Figure 26 illustrates an embodiment of the invention in which a "location-smart" navigational application 76 (Fig. 2) is provided with the ability to allow the user to specify or select a location a mapping function provided by the application, as shown in Figure 26, for example by means of a cursor click. In response to the cursor click, a pop-up locations menu is generated having substantially the same functionality as that described in relation to pop-up locations menu 319 illustrated in Figure 8.

Namely, the user can select to access resources, via a co working hypermedia browser application sending service request messages relating to the location, and/or to save the location into the favourites list (i.e. to save the location into one of the location storage records), etc.

Various embodiments of "location-smart" terminal, terminal applications and service processing nodes have been described above.

The present invention may be implemented by a software module which interoperates with one or more terminal applications, such as a hypermedia browser, a text messaging application, an e-mail application and so on, running on a given terminal type. Features of the present invention relating to browser applications may be implemented by means of software plug-ins to conventional browsers or by means of adaptations to conventional browsers. The present invention may also be implemented by a software module which interoperates with a browser, but is not itself a "plug-in".

In the above description it should be appreciated that the term "SMS" is intended to include reference to similar, and more developed, non-realtime communications modes capable of transmitting terminal to terminal messages from one mobile station to another. Such modes typically allow terminal-to-terminal messages to be addressed using mobile telephone directory numbers (MSISDNs). An example of one such similar communication mode is the proposed Multimedia Messaging Service (MMS), as defined in the WAP MMS Architecture Overview Specification WAP-205-MMSArchOverview-20010425-a available from http:www.wapforum.org, and all references to SMS in the above should be understood to include reference to MMS in the alternative.

In the above description, where network resource identifiers are used to address service request messages, or included in terminal-to-terminal messages for use in generating service request messages at another terminal, it is to be understood that the terminal contains data representing the network resource identifier (generally an Internet domain name, possibly with additional resource parameters, such as a directory name). The network resource identifier data may include more than one such network resource identifier, and the user terminal may automatically, for example based on geographic coverage, select between the two depending on a contextual factor, such as by the user, for example by an alterable default setting in the user terminal. the location being operated upon. Alternatively, the network identifier used may be contained in a single field which is overwritable, so that the actual network resource accessed or identified in a transmission can be set by a party in control of the terminal at a given time. For example, the network resource identifier may be set by the manufacturer of the user terminal, or the operator of a network with which the user terminal is registered, and subsequently reset by the user if desired.

In general, in so far as the present invention relates to sending, receiving or otherwise processing peer to peer messages comprising or identifying geographical location data, whether generated or sent by "location smart" terminals or other data processing devices (such as network-side data processing devices running location applications, to be described below), such messages will be understood to include any kind of peer to peer message, whether real-time (such as in-call data messages), or non-real time (such as store and forward type messages) and whether comprising text, graphics, audio, and/or other media or combinations of media.

Storage of location data at the user terminal, and its management on the user terminal, is an aspect of embodiments of the invention which leads to a number of significant advantages. Namely, privacy is believed to be a real concern to many potential users of location-based services. Storage of the location data, including the current location, of the user terminal keeps the data under the direct control of the user, allowing the user to directly set privacy settings, select who is to receive the information, and allowing the user terminal to display, for example via pop-up boxes, a warning to the user whenever sensitive location data is to be sent, and to allow a user to prevent the transmission if desired. Furthermore, in the embodiments in which the geographical location data is sent as part of a URL, the user may be informed of when, and in what form, geographical location data is sent, for example by display of the URL in an address entry box of the graphical user interface.

In the above embodiments, various different ways of receiving and transmitting geographical location data, via different modes of communication, have been described. In a preferred embodiment, a user terminal includes two or more of the different terminal applications described and the locational data is shared between the different. Preferably, the same location records are accessible from each of the different terminal applications. So, for example, where an item of geographical location has been received via SMS, and saved in an SMS menu interaction, that same item of information appears in the favourite locations list presented in conjunction with the other terminal applications, for example the hypermedia browser application such that service request messages containing the data may be readily generated in the browser application.

## Claims

1. A user terminal (10, 12, 14) capable of processing geographical location data and of transmitting messages to remote data processing devices, the user terminal comprising:
data reception means for receiving data from a first remote data processing device;
geographical location data recognition means arranged to recognise an item of geographical location data in said data received from said first remote data processing device, said recognised item of geographical location data comprising spatial coordinate data;
data transmission means for transmitting data to a second remote data processing device (30, 32); and
data generation means for generating a service request message including said recognised item of geographical location data, said data transmission means being arranged to transmit said service request message to said second remote data processing device (30,32),
**characterised in that** said first remote data processing device is a remote user terminal and said geographical location data recognition means is arranged to recognise said item of geographical location data in data received in a terminal-to-terminal message from said remote user terminal, and
**in that** the user terminal (10,12,14) comprises:
first user interface means arranged to enable selection of said recognised item of geographical location data for storage on the user terminal (10,12,14);
a data store (200) arranged to store a plurality of items selected using the first user interface means, including said recognised item of geographical location data; and
second user interface means arranged to enable selection, from said plurality of stored items, of said recognised item of geographical location data, for the inclusion of said spatial coordinate data from said recognised item of geographical location data in said service request message by said data generation means.

2. A user terminal according to claim 1, wherein the service request message is a client-server transfer protocol request message, such as an HTTP GET request or a WTP GET request.

3. A user terminal according to any of the preceding claims, comprising a browser client application (68) having means for transmitting the service request to said second remote data processing device (30,32), and wherein the second remote data processing device (30,32) is a web server.

4. A user terminal according to any of the preceding claims, wherein the received terminal-to-terminal message comprises one of an SMS message or an e-mail message.

5. A user terminal according to any of the preceding claims, wherein said geographical location data recognition means is arranged to recognise said item of geographical location data in data received in said terminal-to-terminal message from said remote user terminal in the form of a uniform resource locator including said spatial coordinate data.

6. A user terminal according to any preceding claim, comprising means arranged to order the plurality of items of geographical location data on the basis of their proximity to a contextual item of geographical location data, and wherein the second user interface means is adapted to present items of geographical location data in accordance with the order.

7. A user terminal according to any preceding claim, wherein said spatial coordinate data includes latitude and longitude coordinates.

8. A method of arranging a user terminal (10, 12, 14) to process geographical location data and to transmit messages to remote data processing devices, the method comprising, at the user terminal (10,12,14):
receiving data from a first remote data processing device;
recognising an item of geographical location data in said data received from said first remote data processing device, said recognised item of geographical location data comprising spatial coordinate data;
generating a service request message including said recognised item of geographical location data; and
transmitting said service request message to a second remote data processing device (30, 32),
**characterised in that** said first remote data processing device is a remote user terminal, and
**in that** the method comprises, in the user terminal (10,12,14):
recognising said item of geographical location data in data received in a terminal-to-terminal message from said remote user terminal;
providing first user interface means which enables selection of said recognised item of geographical location data for storage on the user terminal (10,12,14);
storing in a data store (200) a plurality of items selected using the first user interface means, including said recognised item of geographical location data; and
providing second user interface means which enables selection, from said plurality of stored items, of said recognised item of geographical location data, for the inclusion of said spatial coordinate data from said recognised item of geographical location data in said service request message.

9. A method according to claim 8, wherein the service request message is a client-server transfer protocol request message, such as an HTTP GET request or a WTP GET request.

10. A method according to claim 8 or 9, wherein a browser client application (68) transmits the service request to said second remote data processing device (30,32), and wherein the second remote data processing device (30,32) is a web server.

11. A method according to any of claims 8 to 10, wherein the received terminal-to-terminal message comprises one of an SMS message or an e-mail message.

12. A method according to any of claims 8 to 11, comprising recognising said item of geographical location data in data received in said terminal-to-terminal message from said remote user terminal in the form of a uniform resource locator including said spatial coordinate data.

13. A method according to any of claims 8 to 12, comprising ordering a plurality of items of geographical location data on the basis of their proximity to a contextual item of geographical location data, and wherein the second user interface means presents items of geographical location data in accordance with the order.

14. A method according to any of claims 8 to 13, wherein said spatial coordinate data includes latitude and longitude coordinates.

## Patentansprüche

1. Anwender-Endgerät (10, 12, 14), das dazu geeignet ist, geografische Positionsdaten zu verarbeiten und Nachrichten an entfernte Datenverarbeitungsvorrichtungen zu übertragen, mit
einer Datenempfangseinheit zum Empfangen von Daten von einer ersten entfernten Datenverarbeitungsvorrichtung,
einer geografischen Positionsdaten-Erkennungseinheit, die dazu ausgestaltet ist, ein Element von grafischen Positionsdaten in den von der ersten entfernten Datenverarbeitungsvorrichtung empfangenen Daten zu erkennen, wobei das erkannte Element der grafischen Positionsdaten räumliche Koordinatendaten aufweist,
einer Datenübertragungseinheit zum Übertragen von Daten an eine zweite entfernte Datenverarbeitungsvorrichtung (30, 32) und
einer Datenerzeugungseinheit zum Erzeugen einer Dienstanfragennachricht mit dem erkannten Element der geografischen Positionsdaten, wobei die Datenübertragungseinheit dazu ausgestaltet ist, die Dienstanfragenachricht an die zweite entfernte Datenverarbeitungsvorrichtung (30, 32) zu übertragen,
**dadurch gekennzeichnet, dass** die erste entfernte Datenverarbeitungsvorrichtung ein entferntes Anwender-Endgerät darstellt und die geografischen Positionsdaten-Erkennungseinheit dazu ausgestaltet ist, das Element der geografischen Positionsdaten in den Daten zu erkennen, die in einer Endgerät-Endgerät-Nachricht von dem entfernten Anwender-Endgerät empfangen wird,
wobei das Anwender-Endgerät (10, 12, 14) aufweist:
eine erste Anwender-Schnittstelleneinheit, welche dazu angeordnet ist, eine Auswahl der erkannten Elemente der geografischen Positionsdaten zum Speichern in dem Anwender-Endgerät (10, 12, 14) zu ermöglichen,
einen Datenspeicher (200), welcher dazu ausgestaltet ist, eine Vielzahl von Elementen einschließlich der erkannten Elemente der geografischen Positionsdaten zu speichern, welche unter Verwendung der ersten Anwender-Schnittstelleneinheit ausgewählt sind, und
eine zweite Anwender-Schnittstelleneinheit, welche dazu ausgestaltet ist, eine Auswahl der erkannten Elemente der geografischen Positionsdaten aus der Vielzahl der gespeicherten Elemente zu ermöglichen, um die räumlichen Koordinatendaten von den erkannten Elementen der geografischen Positionsdaten in der Dienstanfragenachricht durch die Datenerzeugungseinheit einzufügen.

2. Anwender-Endgerät nach Anspruch 1, wobei die Dienstanfragenachricht eine Client-Server-Transferprotokoll-Anfragenachricht wie beispielsweise eine HTTP GET Anfrage oder eine WTP GET Anfrage darstellt.

3. Anwender-Endgerät nach einem der vorherigen Ansprüche, mit einer Browser-Client-Anwendung (68) mit einer Einheit zum Übertragen der Dienstanfrage an die zweite entfernte Datenverarbeitungsvorrichtung (30, 32),
wobei die zweite entfernte Datenverarbeitungsvorrichtung (30, 32) einen Webserver darstellt.

4. Anwender-Endgerät nach einem der vorherigen Ansprüche, wobei die empfangene Endgerät-Endgerät-Nachricht eine SMS Nachricht oder eine E-Mail Nachricht aufweist.

5. Anwender-Endgerät nach einem der vorherigen Ansprüche, wobei die geografische Positionsdaten-Erkennungseinheit dazu ausgestaltet ist, das Element der geografischen Positionsdaten in den Daten zu erkennen, die in einer Endgerät-Endgerät-Nachricht von dem entfernten Anwender-Endgerät in Form eines Uniform Resource Locator einschließlich der räumlichen Koordinatendaten empfangen worden ist.

6. Anwender-Endgerät nach einem der vorherigen Ansprüche, ferner mit einer Einheit, die dazu ausgestaltet ist, die Vielzahl der Elemente der geografischen Positionsdaten auf der Basis ihrer räumlichen Nähe zu einem Kontextelement der geografischen Positionsdaten zu ordnen,
wobei die zweite Anwender-Schnittstelleneinheit dazu ausgestaltet ist, Elemente der geografischen Positionsdaten entsprechend der Reihenfolge darzustellen.

7. Anwender-Endgerät nach einem der vorherigen Ansprüche, wobei die räumlichen Koordinatendaten Latituden- und Longituden-Koordinaten aufweisen.

8. Verfahren zum Anordnen eines Anwender-Endgerätes (10, 12, 14) zur Verarbeitung von geografischen Positionsdaten und zum Übertragen von Nachrichten an entfernte Datenverarbeitungsvorrichtungen, mit den Schritten in dem Anwender-Endgerät (10, 12, 14):
Empfangen von Daten von einer ersten entfernten Datenverarbeitungseinrichtung,
Erkennen eines Elementes von geografischen Positionsdaten in den von der ersten entfernten Datenverarbeitungsvorrichtung empfangenen Daten, wobei das erkannte Element der geografischen Positionsdaten räumliche Koordinatendaten aufweisen,
Erzeugen einer Dienstanfragenachricht einschließlich des erkannten Elementes der geografischen Positionsdaten und
Übertragen der Dienstanfragenachricht an eine zweite entfernte Datenverarbeitungsvorrichtung (30, 32),
**dadurch gekennzeichnet, dass** die erste Datenverarbeitungseinrichtung ein entferntes Anwender-Endgerät darstellt,
wobei das Verfahren die folgenden Schritte in dem Anwender-Endgerät (10, 12, 14) aufweist:
Erkennen des Elementes der geografischen Positionsdaten in Daten, welche in einer Endgerät-Endgerät-Nachricht von dem entfernten Anwender-Endgerät empfangen wurden,
Vorsehen einer ersten Anwender-Schnittstelleneinheit, welche eine Auswahl aus den erkannten Elementen der geografischen Positionsdaten zum Speichern in dem Anwender-Endgerät (10, 12, 14) ermöglicht,
Speichern einer Vielzahl von Elementen einschließlich des erkannten Elements der geografischen Positionsdaten in einem Datenspeicher (200), welche unter Verwendung der ersten Anwender-Schnittstelleneinheit ausgewählt werden, und
Vorsehen der zweiten Anwender-Schnittstelleneinheit, welche eine Auswahl der erkannten Elemente der geografischen Positionsdaten aus der Vielzahl der gespeicherten Elemente ermöglicht, um die räumlichen Koordinatendaten von dem erkannten Element der geografischen Positionsdaten in der Dienstanfragenachricht einzufügen.

9. Verfahren nach Anspruch 8, wobei die Dienstanfrageeinheit eine Client-Server-Transfer-Protokollanfragenachricht wie beispielsweise eine HTTP GET Nachricht oder eine WTP GET Nachricht darstellt.

10. Verfahren nach Anspruch 8 oder 9, wobei eine Browser Client Anwendung (68) die Dienstanfrage an die zweite entfernte Datenverarbeitungsvorrichtung (30, 32) überträgt und
wobei die zweite entfernte Datenverarbeitungsvorrichtung (30, 32) ein Webserver ist.

11. Verfahren nach einem der Ansprüche 8 bis 10, wobei die empfangene Endgerät-Endgerät-Nachricht eine SMS Nachricht oder eine E-Mail Nachricht darstellt.

12. Verfahren nach einem der Ansprüche 8 bis 11, ferner mit dem Schritt:
Erkennen des Elementes der geografischen Positionsdaten in den Daten, die in der Endgerät-Endgerät-Nachricht von dem entfernten Anwender-Endgerät in Form eines Uniform Resource Locator einschließlich der räumlichen Koordinatendaten empfangen wurde.

13. Verfahren nach einem der Ansprüche 8 bis 12, ferner mit dem Schritt:
Ordnen einer Vielzahl von Elementen der geografischen Positionsdaten auf der Basis ihrer räumlichen Nähe zu einem Kontextelement der geografischen Positionsdaten und
wobei die zweite Anwenderschnittstelle Elemente der geografischen Positionsdaten entsprechend der Reihenfolge darstellt.

14. Verfahren nach einem der Ansprüche 8 bis 13, wobei die grafischen Koordinatendaten Latituden- und Longituden-Koordinaten aufweisen.

## Revendications

1. Terminal utilisateur (10, 12, 14) adapté pour traiter des données de localisation géographique et pour transmettre des messages à des dispositifs de traitement de données à distance, le terminal utilisateur comprenant :
des moyens de réception de données pour recevoir des données provenant d'un premier dispositif de traitement de données à distance ;
des moyens de reconnaissance de données de localisation géographique agencés pour reconnaître un élément de données de localisation géographique dans lesdites données reçues à partir dudit premier dispositif de traitement de données à distance, ledit élément reconnu de données de localisation géographique comprenant des données de coordonnées dans l'espace ;
des moyens de transmission de données pour transmettre des données à un deuxième dispositif de traitement de données à distance (30, 32) ; et
des moyens de génération de données pour générer un message de demande de service comprenant ledit élément reconnu de données de localisation géographique, lesdits moyens de transmission de données étant agencés pour transmettre ledit message de demande de service audit deuxième dispositif de traitement de données à distance (30, 32),
**caractérisé en ce que** ledit premier dispositif de traitement de données à distance est un terminal utilisateur à distance et lesdits moyens de reconnaissance de données de localisation géographique sont agencés pour reconnaître ledit élément de données de localisation géographique dans des données reçues dans un message de terminal à terminal provenant dudit terminal utilisateur à distance, et
**en ce que** le terminal utilisateur (10, 12, 14) comprend :
des premiers moyens d'interface utilisateur agencés pour permettre une sélection dudit élément reconnu de données de localisation géographique pour le stockage dans le terminal utilisateur (10, 12, 14) ;
une mémoire de données (200) agencée pour stocker une pluralité d'éléments sélectionnés en utilisant les premiers moyens d'interface utilisateur, comprenant ledit élément reconnu de données de localisation géographique ; et
des deuxièmes moyens d'interface utilisateur agencés pour permettre une sélection, à partir de ladite pluralité d'éléments stockés, dudit élément reconnu de données de localisation géographique, pour l'inclusion desdites données de coordonnées dans l'espace à partir dudit élément reconnu de données de localisation géographique dans ledit message de demande de service par lesdits moyens de génération de données.

2. Terminal utilisateur selon la revendication 1, **caractérisé en ce que** le message de demande de service est un message de demande de protocole de transfert client-serveur, tel qu'une demande HTTP GET ou une demande WTP GET.

3. Terminal utilisateur selon l'une quelconque des revendications 1 et 2, **caractérisé en ce qu'**il comprend une application client de navigateur (68) ayant des moyens pour transmettre la demande de service audit deuxième dispositif de traitement de données à distance (30, 32), et dans lequel le deuxième dispositif de traitement de données à distance (30, 32) est un serveur Web.

4. Terminal utilisateur selon l'une quelconque des revendications 1 à 3, **caractérisé en ce que** le message reçu de terminal à terminal comprend au moins un message de service de messages courts ou un message de courrier électronique.

5. Terminal utilisateur selon l'une quelconque des revendications 1 à 4, **caractérisé en ce que** lesdits moyens de reconnaissance de données de localisation géographique sont agencés pour reconnaître ledit élément de données de localisation géographique dans des données reçues dans ledit message de terminal à terminal provenant dudit terminal utilisateur à distance sous la forme d'une adresse URL comprenant lesdites données de coordonnées dans l'espace.

6. Terminal utilisateur selon l'une quelconque des revendications 1 à 5, **caractérisé en ce qu'**il comprend des moyens agencés pour ordonner la pluralité d'éléments de données de localisation géographique sur la base de leur proximité à un élément contextuel de données de localisation géographique, et dans lequel les deuxièmes moyens d'interface utilisateur sont adaptés pour présenter des éléments de données de localisation géographique en fonction de l'ordre.

7. Terminal utilisateur selon l'une quelconque des revendications 1 à 6, **caractérisé en ce que** lesdites données de coordonnées dans l'espace comprennent des coordonnées de latitude et de longitude.

8. Procédé d'agencement d'un terminal utilisateur (10, 12, 14) pour traiter des données de localisation géographique et pour transmettre des messages à des dispositifs de traitement de données à distance, le procédé comprenant, au niveau du terminal utilisateur (10, 12, 14) des étapes consistant à effectuer:
la réception de données provenant d'un premier dispositif de traitement de données à distance ;
la reconnaissance d'un élément de données de localisation géographique dans lesdites données reçues à partir dudit premier dispositif de traitement de données à distance, ledit élément reconnu de données de localisation géographique comprenant des données de coordonnées dans l'espace ;
la génération d'un message de demande de service comprenant ledit élément reconnu de données de localisation géographique ; et
la transmission dudit message de demande de service à un deuxième dispositif de traitement de données à distance (30, 32),
**caractérisé en ce que** ledit premier dispositif de traitement de données à distance est un terminal utilisateur à distance, et
**en ce que** le procédé comprend, au niveau du terminal utilisateur (10, 12, 14) des étapes consistant à effectuer :
la reconnaissance dudit élément de données de localisation géographique dans des données reçues dans un message de terminal à terminal provenant dudit terminal utilisateur à distance ;
la prédisposition de premiers moyens d'interface utilisateur qui permettent une sélection dudit élément reconnu de données de localisation géographique pour le stockage dans le terminal utilisateur (10, 12, 14) ;
le stockage dans une mémoire de données (200) d'une pluralité d'éléments sélectionnés en utilisant les premiers moyens d'interface utilisateur, comprenant ledit élément reconnu de données de localisation géographique ; et
la prédisposition de deuxièmes moyens d'interface utilisateur qui permettent une sélection, à partir de ladite pluralité d'éléments stockés, dudit élément reconnu de données de localisation géographique, pour l'inclusion desdites données de coordonnées dans l'espace à partir dudit élément reconnu de données de localisation géographique dans ledit message de demande de service.

9. Procédé selon la revendication 8, **caractérisé en ce que** le message de demande de service est un message de demande de protocole de transfert client-serveur, tel qu'une demande HTTP GET ou une demande WTP GET.

10. Procédé selon l'une quelconque des revendications 8 et 9, **caractérisé en ce que** une application client de navigateur (68) transmet la demande de service audit deuxième dispositif de traitement de données à distance (30, 32), et dans lequel le deuxième dispositif de traitement de données à distance (30, 32) est un serveur Web.

11. Procédé selon l'une quelconque des revendications 8 à 10, **caractérisé en ce que** le message reçu de terminal à terminal comprend au moins un message de service de messages courts ou un message de courrier électronique.

12. Procédé selon l'une quelconque des revendications 8 à 11, **caractérisé en ce que** dans l'étape de reconnaissance dudit élément de données de localisation géographique, les données reçues sont comprises dans ledit message de terminal à terminal provenant dudit terminal utilisateur à distance et sous la forme d'une adresse URL comprenant lesdites données de coordonnées dans l'espace.

13. Procédé selon l'une quelconque des revendications 8 à 12, **caractérisé en ce qu'**il comprend une étape d'ordonnancement d'une pluralité d'éléments de données de localisation géographique sur la base de leur proximité à un élément contextuel de données de localisation géographique, et **en ce que** les deuxièmes moyens d'interface utilisateur présentent des éléments de données de localisation géographique en fonction de l'ordre.

14. Procédé selon l'une quelconque des revendications 8 à 13, **caractérisé en ce que** lesdites données de coordonnées dans l'espace comprennent des coordonnées de latitude et de longitude.
